# EUROPEAN PATENT SPECIFICATION

(11) **EP 4 557 022 B1**
(45) Date of publication and mention of the grant of the patent: **09.12.2026**
(21) Application number: 22956388.7
(22) Date of filing: 22.08.2022
(51) Int. Cl.: G05B 13/02

(54) **PARAMETER SEARCH DEVICE AND PARAMETER SEARCH METHOD**
PARAMETERSUCHVORRICHTUNG UND PARAMETERSUCHVERFAHREN
DISPOSITIF DE RECHERCHE DE PARAMÈTRE ET PROCÉDÉ DE RECHERCHE DE PARAMÈTRE

(43) Date of publication of application: 21.05.2025
(73) Proprietor: MITSUBISHI ELECTRIC CORPORATION, Chiyoda-ku Tokyo 100-8310 (JP)
(72) Inventor: NAKANE, Koki, Tokyo 100-8310 (JP); MARIYAMA, Toshisada, Tokyo 100-8310 (JP); TAKEMURA, Ryuichi, Tokyo 100-8310 (JP); TANAKA, Kosuke, Tokyo 100-8310 (JP); ITO, Rin, Tokyo 100-8310 (JP)
(74) Representative: Pfenning, Meinig & Partner mbB
(86) International application number: PCT/JP2022/031475
(87) International publication number: WO 2024/042560

(56) References cited:
- WO-A1-2020/261572
- WO-A1-2021/186521
- WO-A1-2021/245898
- JP-A- 2012 149 839
- US-A1- 2016 305 678
- US-A1- 2021 285 671
- US-A1- 2022 146 128

## Description

### TECHNICAL FIELD

The present disclosure relates to a parameter search device and a parameter search method.

### BACKGROUND ART

There has been proposed a technique of searching for a parameter that specifies an operation condition of a mechanical device for each environment in which the mechanical device is installed or each operation task of the mechanical device. For example, Patent Literature 1 describes an air-conditioner-linked control system that controls setting conditions of an air conditioner and a load distribution of a central processing unit (CPU) of an information processing device in a linked manner, in a data center in which the air conditioner is provided and in which data processing is performed by the information processing device.

The air-conditioner-linked control system described in Patent Literature 1 searches for a combination of the setting condition of the air conditioner and the load distribution of the CPU of the information processing device, which minimizes the estimated power consumption estimated by a power consumption learning model, as an optimum combination state under the condition that the estimated temperature and humidity estimated by a temperature and humidity learning model fall within a predetermined specified range.

### CITATION LIST

### PATENT LITERATURE

Patent Literature 1: JP 2012-149839 A
Patent Literature 2: US 2016/305678 A1
Patent Literature 3: US 2021/285671 A1

### SUMMARY OF INVENTION

### TECHNICAL PROBLEM

The system described in Patent Literature 1 searches for parameters indicating respective operating conditions of an air conditioner that is a mechanical device and an information processing device under the condition that the estimated temperature and humidity fall within a predetermined specified range. For this reason, since the parameter search is performed with a certain number of search times or search time determined by the above specified range, there is a problem that the parameter cannot be efficiently searched. For example, depending on the number of search times or the search time, there may be a case where the target parameter cannot be sufficiently searched, or an unnecessary search is continued even if the target parameter is obtained by searching.
Also Patent Literature 2 describes a predictive building control system for individual buildings and networks of buildings that optimizes energy use while maintaining thermal comfort in multiple thermal zones. It uses statistical/black-box models (e.g. building response and predictive models) trained on historical data, together with an optimizer, to determine HVAC setpoints based on weather forecasts, building characteristics, and operational constraints. The system is integrated with a building energy management system and can coordinate HVAC devices, sensors, and energy sources (including central plants and grids) to meet comfort and energy objectives. Patent Literature 3 discloses a building control system that uses a predictive model, in particular neural networks, to control HVAC equipment while managing occupant discomfort via a "discomfort tolerance." Historical and ongoing building data are used to learn how occupants change setpoints and to define a tolerance band for environmental conditions (e.g. indoor air temperature) within which predicted discomfort remains acceptable. The system dynamically adjusts this tolerance, generates comfort constraints for model predictive control, and maintains building conditions within a region that balances energy optimization and occupant comfort.

The present disclosure solves the above problem, and an object thereof is to obtain a parameter search device and a parameter search method capable of efficiently searching for a parameter indicating a target operating condition of a mechanical device.

### SOLUTION TO PROBLEM

A parameter search device according to the present disclosure includes: an operation result collection unit to collect an operation result including parameters indicating an operation condition of a mechanical device; an evaluation value acquisition unit to acquire evaluation values of the parameters obtained using the operation result; and a parameter search unit to search for a target parameter from the parameters indicating the operation condition of the mechanical device, in which the parameter search unit predicts, when a plurality of search candidates for the parameters and the evaluation values are input, a relationship between the parameters and the evaluation values in the search candidates by using a machine learning model that outputs a relationship between the parameters and the evaluation values in the search candidates, compares a prediction result of the machine learning model with a search best having a maximum evaluation value among the parameters obtained by searching, and uses a number of the search candidates whose evaluation values exceed the search best as a search end index, and determines whether or not to continue searching for the parameter on a basis of a comparison result between the search end index and a threshold.

### ADVANTAGEOUS EFFECTS OF INVENTION

According to the present disclosure, a result of predicting a relationship between a parameter that is a search candidate and an evaluation value is compared with a search best having a maximum evaluation value among the parameters obtained by searching, and whether or not to continue searching for the parameter is determined on the basis of a comparison result between a search end index that is the number of search candidates having an evaluation value exceeding the search best and a threshold. As a result, the parameter search device according to the present disclosure can efficiently search for the parameter indicating the target operation condition of the mechanical device without preliminarily determining a certain number of searches or a certain search time.

### BRIEF DESCRIPTION OF DRAWINGS

FIG. 1 is a block diagram illustrating a configuration of a parameter search device according to a first embodiment.
FIG. 2 is a diagram illustrating a relationship between a parameter and an evaluation value in an initial stage of parameter search.
FIG. 3 is a diagram illustrating a relationship between a parameter and an evaluation value in a late stage of the parameter search.
FIG. 4 is a flowchart illustrating a parameter search method according to the first embodiment.
FIGS. 5A and 5B are block diagrams illustrating a hardware configuration that implements functions of the parameter search device according to the first embodiment.
FIG. 6 is a block diagram illustrating a configuration of a specific example of the parameter search device according to the first embodiment.
FIG. 7 is a flowchart illustrating a specific example of the parameter search method according to the first embodiment.
FIG. 8 is a block diagram illustrating a configuration of a parameter search device according to a second embodiment.
FIG. 9 is a block diagram illustrating a configuration of a parameter search device according to a third embodiment.
FIG. 10 is a flowchart illustrating a parameter search method according to the third embodiment.
FIG. 11 is a block diagram illustrating a configuration of a parameter search device according to a fourth embodiment.
FIG. 12 is a block diagram illustrating a configuration of a parameter search device according to a fifth embodiment.
FIG. 13 is a conceptual diagram illustrating a refrigeration cycle of an air-conditioning cooling and heating device according to the fifth embodiment.
FIG. 14 is a flowchart illustrating a parameter search method according to the fifth embodiment.
FIG. 15 is a block diagram illustrating a configuration of an air-conditioning cooling and heating device including a parameter search device according to the fifth embodiment.
FIG. 16 is a block diagram illustrating a configuration of a parameter search device according to a sixth embodiment.
FIG. 17 is a conceptual diagram illustrating a refrigeration cycle of an air-conditioning cooling and heating device according to the sixth embodiment.

### DESCRIPTION OF EMBODIMENTS

### First Embodiment.

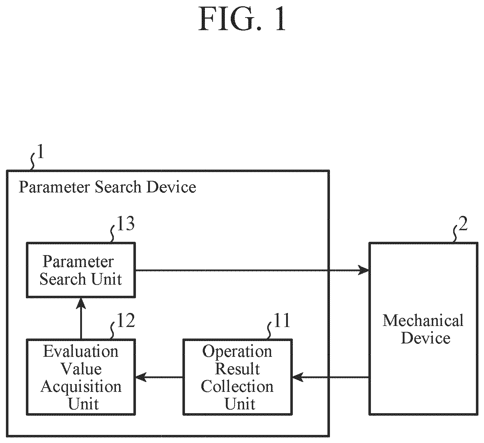

FIG. 1 is a block diagram illustrating a configuration of a parameter search device 1 according to a first embodiment. In FIG. 1, the parameter search device 1 is a device that searches for a target operation condition of a mechanical device 2, and specifically, searches for a parameter indicating the operation condition of the mechanical device 2. The value of the parameter of the search result is set in the mechanical device 2. The mechanical device 2 is, for example, an air-conditioning cooling and heating device including a fan, an electronic expansion valve, a compressor, and the like, an industrial device such as a machine tool, or a device such as a household electrical appliance.

The operation condition is information indicating contents of an operation to be performed by each component of a control target included in the mechanical device 2. For example, when the mechanical device 2 is an air-conditioning cooling and heating device, the operation condition is a value of an operation parameter indicating an electronic expansion valve, an electromagnetic valve, an operation frequency of a compressor, an air volume of a fan, a rotation speed of the fan, an angle of a vane that determines a blowing direction, and a flow rate of cooling and heating control target water provided in the air-conditioning cooling and heating device.

A conventional technique for controlling the operation of a mechanical device searches for a parameter indicating an operation condition of the mechanical device under a condition that an estimated peripheral state of the mechanical device falls within a predetermined specified range. In this case, the parameter search is performed at a certain number of search times or search time determined by the specified range. Therefore, depending on the number of search times or the search time, there may be a case where the target parameter cannot be sufficiently searched, or an unnecessary search is continued even if the target parameter is obtained by searching.

In a case where the optimum value of the evaluation value of the parameter indicating the operation condition of the mechanical device is known, an index referred to as a simple regret described in Reference Literature 1 can be used. It is possible to shorten the parameter search time by determining termination of the parameter search on the basis of the simple regret.

However, this method cannot be used for parameter search unless the optimum value of the evaluation value of the parameter is known.

(Reference Literature 1) Automatic Termination for Hyperparameter Optimization, ICLR2022

On the other hand, the parameter search device 1 predicts the relationship between the parameters and the evaluation values in the plurality of search candidates using the machine learning model. Then, the parameter search device 1 compares the prediction result of the machine learning model with the search best having the maximum evaluation value among the parameters obtained by searching, and refers to the number of search candidates whose evaluation values exceed the search best as the search end index. The parameter search device 1 determines whether or not to continue the parameter search on the basis of the comparison result between the search end index and the threshold.

For example, the parameter search device 1 efficiently searches for a parameter indicating an optimum operation condition of the mechanical device 2 using Bayesian optimization, and determines a search end index using a prediction relationship between parameters by a Gaussian process regression model and an evaluation value. The parameter search is ended at an appropriate timing by using the determined search end index. As a result, the parameter search device 1 can efficiently search for the parameter indicating the target operation condition of the mechanical device 2 without preliminarily setting a certain number of search times or a search time.

As illustrated in FIG. 1, the parameter search device 1 includes an operation result collection unit 11, an evaluation value acquisition unit 12, and a parameter search unit 13. The operation result collection unit 11 collects operation results of the mechanical device 2. The operation result of the mechanical device 2 is information including a parameter indicating an operation condition of the mechanical device 2. The operation result is, for example, information including a value of a parameter set as an operation condition of the mechanical device 2, information indicating the configuration of the mechanical device 2, information specific to the mechanical device 2 such as an operation mode, log data of past operation, and the like.

The operation result collection unit 11 may acquire the operation result of the mechanical device 2 from the mechanical device 2 via an encoder. For example, the operation result collection unit 11 may collect detection values detected by sensors such as a temperature sensor, a pressure sensor, an acceleration sensor, a gyro sensor, and a humidity sensor disposed in the mechanical device 2 as they are, or may collect calculated values using these detection values.

The evaluation value acquisition unit 12 acquires an evaluation value obtained by using the operation result for the parameter indicating the operation condition. The evaluation value is an index value indicating how close the parameter corresponding to the evaluation value is to the parameter indicating the target operation condition of the mechanical device 2. For example, the evaluation value may be stored in a storage device from which the parameter search device 1 can read the stored content in association with the parameter, and the evaluation value acquisition unit 12 may read and acquire the evaluation value corresponding to the parameter included in the operation result from the above storage device.

In addition, the evaluation value of the parameter may be a value that is maximized or minimized such that a difference between the actually measured value of the parameter and its target value is minimized. For example, when the operation speed of the component included in the mechanical device 2 has a target value, the evaluation value acquisition unit 12 acquires an evaluation value represented by the following Formula (1), and the parameter search device 1 searches for a parameter whose evaluation value is minimized as a target parameter. 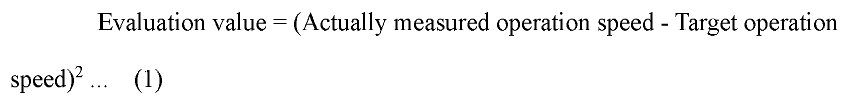 Evaluation value = (Actually measured operation speed - Target operation speed)2 ... (1)

When there is a plurality of parameters for one operation condition in the mechanical device 2, the evaluation value acquisition unit 12 may acquire the evaluation value of each of these parameters, or may acquire a common evaluation value obtained by performing calculation such as a weighted sum.

The evaluation value acquisition unit 12 may calculate the evaluation value of the parameter included in an operation result using the operation result of the mechanical device 2. For example, when a target value is set for the operation speed of the component included in the mechanical device 2 and the actually measured operation speed is acquired as the operation result, the evaluation value acquisition unit 12 calculates the evaluation value indicated by the above Formula (1) using both values.

As described above, "acquiring" the evaluation value of the parameter in the parameter search device 1 includes "calculating" and acquiring the evaluation value using the operation result of the mechanical device 2.

The parameter search unit 13 searches for a target parameter from the parameters indicating the operating condition of the mechanical device 2 collected by the operation result collection unit 11. Specifically, when a plurality of search candidates for parameters and evaluation values are input, the parameter search unit 13 predicts a relationship between the parameters and the evaluation values in the search candidates using a machine learning model that outputs the relationship between the parameters and the evaluation values in the search candidates.

As the machine learning model, for example, one or more models among various models such as a linear regression, a generalized linear model, a Gaussian process regression, a hierarchical Bayesian model, a neural network, a neural process, a random forest, or a gradient boosting tree are used.

In addition, in a case where the number of dimensions to be input to the machine learning model, that is, the number of parameters to be input is large, a parameter in which the number of dimensions is reduced using principal component analysis, singular value decomposition, tensor decomposition, Auto Encoder, or the like, which is a method of reducing the number of dimensions, may be input to the machine learning model.

For example, the parameter search unit 13 causes the machine learning model to learn the relationship between the parameters included in the operation result and the evaluation values using the parameter search candidates generated on the basis of the operation result of the mechanical device 2 as training data. As described above, since the parameter search unit 13 generates the machine learning model each time using the actually measured data of the operation result of the mechanical device 2, the machine learning model depending on the current situation of the mechanical device 2 can be obtained.

In addition, the machine learning model may be stored in a storage device from which the parameter search device 1 can read the stored content in association with the parameter, and the parameter search unit 13 may read and use the machine learning model corresponding to the parameter included in the operation result from the above storage device.

The parameter search unit 13 compares the prediction result by the machine learning model with a search best having the maximum evaluation value among the parameters obtained by searching, and refers to the number of search candidates whose evaluation values exceed the search best as a "search end index". The parameter search unit 13 determines whether or not to continue the parameter search on the basis of the comparison result between the search end index and a threshold. The parameters of the final search result are set in the mechanical device 2. As a result, the mechanical device 2 operates under the target operation condition indicated by the parameter of the search result.

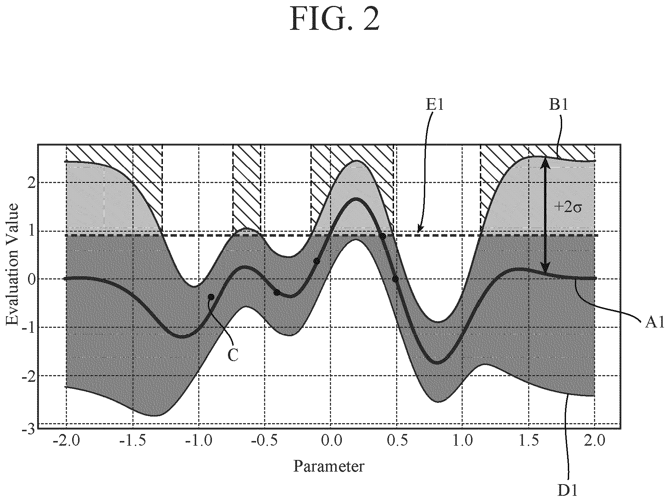

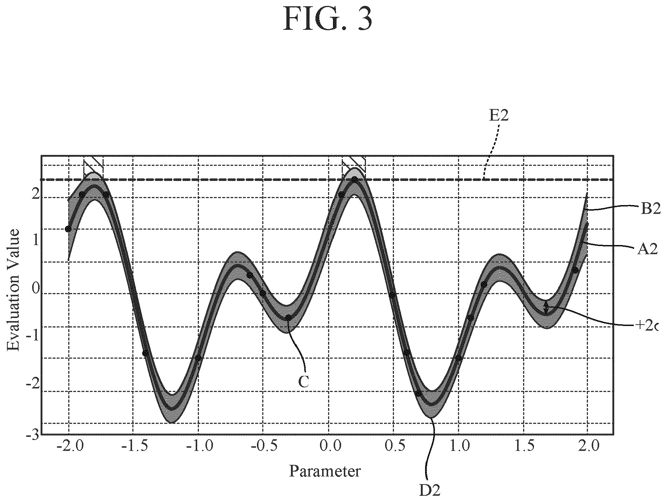

FIG. 2 is a diagram illustrating a relationship between parameters and evaluation values in an initial stage of parameter search. FIG. 3 is a diagram illustrating a relationship between parameters and evaluation values in a late stage of the parameter search. In FIGS. 2 and 3, the horizontal axis represents a parameter indicating a certain operation condition, and the vertical axis represents an evaluation value of the parameter. The parameter search unit 13 causes the machine learning model to learn the relationship between the parameters included in the operation result and the evaluation values using the parameters included in the operation result of the mechanical device 2 collected by the operation result collection unit 11 and the evaluation value as training data. Subsequently, the parameter search unit 13 generates a plurality of search candidates for the parameters and the evaluation values, and inputs these search candidate data to the machine learning model to predict the relationship between the parameters and the evaluation values in the search candidates.

The prediction result of the relationship between the parameters and the evaluation values in the search candidates is, for example, a prediction value of an average µ and a standard deviation σ of the search candidate data having the parameter and the evaluation value as elements. In FIGS. 2 and 3, A1 and A2 are functions indicating an average µ of evaluation values for the parameters. B1 and B2 are functions indicating +2σ for the average µ. C is parameters and evaluation values collected by the operation result collection unit 11, and is actually measured data actually measured in the mechanical device 2. The average µ indicated by the functions A1 and A2 is predicted for the actually measured point C using a machine learning model. D1 and D2 are functions indicating -2σ for the averages A1 and A2.

The parameter search unit 13 refers to the actually measured value of the parameter having the largest evaluation value among the parameters included in the actually measured operation result as a search best E1. Subsequently, the parameter search unit 13 counts the number of search candidates exceeding the search best E1 indicated by a broken line in FIG. 2, and uses the counted number as a search end index. In the initial stage of the parameter search, as illustrated in FIG. 2, since the number of search candidates exceeding the search best E1 is large, the value of the search end index is equal to or larger than the threshold. When the search end index is equal to or larger than the threshold, the parameter search unit 13 determines to continue the parameter search.

When the parameter search is continued, the parameter search unit 13 determines, for example, a search candidate for which the predicted relationship between the parameters and the evaluation values satisfies a selection condition as a next search target and sets the next search target in the mechanical device 2. For example, a search candidate having the relationship between the parameters and the evaluation values closest to the target is determined as the next search target. The parameters of the determined search target are set in the mechanical device 2. As a result, the mechanical device 2 is operated under the operation condition indicated by the parameters of the search target, and the operation result collection unit 11 collects the operation results, so that the parameter search unit 13 repeatedly executes the above-described series of parameter searches. The parameter search is repeatedly executed, and the process proceeds to the late stage of parameter search illustrated in FIG. 3.

The parameter search unit 13 refers to the actually measured value of the parameter having the largest evaluation value among the parameters included in the actually measured operation result as a search best E2. Subsequently, the parameter search unit 13 counts the number of search candidates exceeding the search best E2 indicated by a broken line in FIG. 3, and uses the counted number as a search end index. In the late stage of the parameter search, as illustrated in FIG. 3, the number of search candidates exceeding the search best E2 decreases. For example, when the search end index is less than the threshold, the parameter search unit 13 determines to end the parameter search. In a case where the threshold is "0", the parameter search is ended at the timing when the search end index becomes 0, that is, at the timing when the number of search candidates exceeding the search best becomes 0.

As described above, the parameter search device 1 can efficiently perform the parameter search by combining the parameter search and the search end determination.

Furthermore, since the parameter search can be terminated at an appropriate timing on the basis of the search end index, the parameter search time can be shortened.

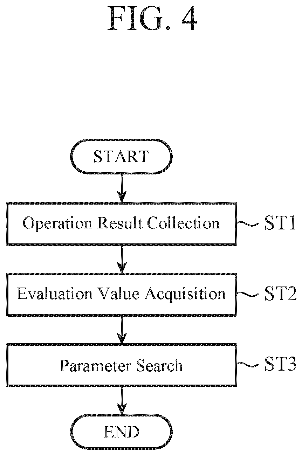

FIG. 4 is a flowchart illustrating a parameter search method according to the first embodiment, and is a parameter search method by the parameter search device 1.

The operation result collection unit 11 collects an operation result including a parameter indicating an operation condition of the mechanical device 2 (step ST1). The evaluation value acquisition unit 12 acquires the evaluation value of the parameter obtained using the operation result (step ST2).

Next, the parameter search unit 13 searches for a target parameter from among the parameters indicating the operation condition of the mechanical device 2 (step ST3).

In step ST3, the parameter search unit 13 predicts the relationship between the parameters and the evaluation values in the search candidates using the machine learning model, compares the prediction result by the machine learning model with the search best having the maximum evaluation value among the parameters obtained by searching, uses the number of search candidates having the evaluation value exceeding the search best as the search end index, and determines whether or not to continue the parameter search on the basis of the comparison result between the search end index and the threshold.

By executing the above parameter search method, it is possible to efficiently search for a parameter indicating a target operation condition of the mechanical device 2 without defining a certain number of search times or a certain search time.

Next, a hardware configuration for implementing the functions of the parameter search device 1 will be described.

The functions of the operation result collection unit 11, the evaluation value acquisition unit 12, and the parameter search unit 13 included in the parameter search device 1 are implemented by a processing circuit. That is, the parameter search device 1 includes a processing circuit for executing the processing of steps ST1 to ST3 illustrated in FIG. 4. The processing circuit may be dedicated hardware, or may be a CPU that executes a program stored in a memory.

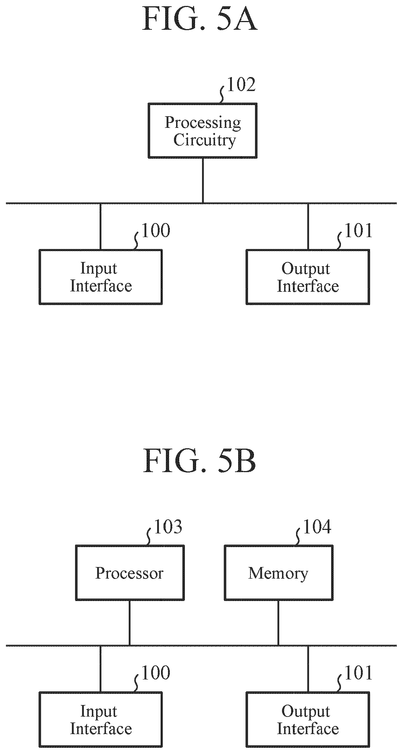

FIG. 5A is a block diagram illustrating a hardware configuration that implements the functions of the parameter search device 1. FIG. 5B is a block diagram illustrating a hardware configuration for executing software that implements the functions of the parameter search device 1. In FIGS. 5A and 5B, an input interface 100 is an interface through which the parameter search device 1 relays information indicating an operation result from the mechanical device 2. An output interface 101 is an interface that relays a parameter or the like of a search result output from the parameter search device 1 to the mechanical device 2.

In a case where the processing circuit is a processing circuitry 102 of dedicated hardware illustrated in FIG. 5A, the processing circuitry 102 corresponds to, for example, a single circuit, a composite circuit, a programmed processor, a parallel programmed processor, an application specific integrated circuit (ASIC), a field-programmable gate array (FPGA), or a combination thereof. The functions of the operation result collection unit 11, the evaluation value acquisition unit 12, and the parameter search unit 13 included in the parameter search device 1 may be implemented by separate processing circuits, or these functions may be collectively implemented by one processing circuit.

In a case where the processing circuit is a processor 103 illustrated in FIG. 5B, the functions of the operation result collection unit 11, the evaluation value acquisition unit 12, and the parameter search unit 13 included in the parameter search device 1 are implemented by software, firmware, or a combination of software and firmware. Note that the software or firmware is described as a program and stored in a memory 104.

The processor 103 reads and executes the program stored in the memory 104 to implement the functions of the operation result collection unit 11, the evaluation value acquisition unit 12, and the parameter search unit 13 included in the parameter search device 1. For example, the parameter search device 1 includes the memory 104 for storing a program that results in execution of the processing from step ST1 to step ST3 illustrated in FIG. 4 when executed by the processor 103. These programs cause a computer to execute procedures or methods of processing performed by the operation result collection unit 11, the evaluation value acquisition unit 12, and the parameter search unit 13. The memory 104 may be a computer-readable storage medium storing a program for causing a computer to function as the operation result collection unit 11, the evaluation value acquisition unit 12, and the parameter search unit 13.

The memory 104 corresponds to, for example, a nonvolatile or volatile semiconductor memory such as a random access memory (RAM), a read only memory (ROM), a flash memory, an erasable programmable read only memory (EPROM), or an electrically-EPROM (EEPROM) (registered trademark), a magnetic disk, a flexible disk, an optical disk, a compact disk, a mini disk, or a DVD.

Some of the functions of the operation result collection unit 11, the evaluation value acquisition unit 12, and the parameter search unit 13 included in the parameter search device 1 may be implemented by dedicated hardware, and other functions may be implemented by software or firmware. For example, the functions of the operation result collection unit 11 and the evaluation value acquisition unit 12 are implemented by the processing circuitry 102 that is dedicated hardware, and the functions of the parameter search unit 13 are implemented by the processor 103 reading and executing a program stored in the memory 104. As described above, the processing circuit can implement the above functions by hardware, software, firmware, or a combination thereof.

Hereinafter, a specific example of the parameter search device 1 will be described.

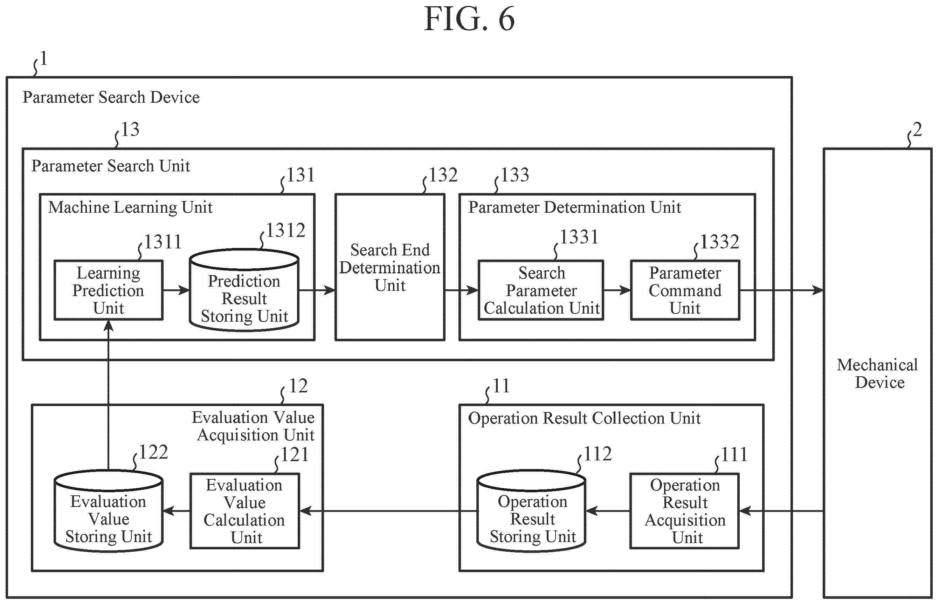

FIG. 6 is a block diagram illustrating a configuration of a specific example of the parameter search device 1. In FIG. 6, the parameter search device 1 includes an operation result collection unit 11, an evaluation value acquisition unit 12, and a parameter search unit 13. The operation result collection unit 11 includes an operation result acquisition unit 111 and an operation result storing unit 112. The evaluation value acquisition unit 12 includes an evaluation value calculation unit 121 and an evaluation value storing unit 122. The parameter search unit 13 includes a machine learning unit 131, a search end determination unit 132, and a parameter determination unit 133.

The operation result acquisition unit 111 acquires an operation result of the mechanical device 2. For example, the operation result acquisition unit 111 acquires detection values detected by a sensor group (temperature sensor, pressure sensor, acceleration sensor, gyro sensor, or humidity sensor) disposed in the mechanical device 2. These detection values are values of parameters that define the operation condition under which the mechanical device 2 is operated. In addition, the operation result acquisition unit 111 may acquire physical quantities that define the operation condition, which are calculated using these detection values.

The operation result storing unit 112 stores the operation result acquired by the operation result acquisition unit 111. The operation result storing unit 112 is a storage device included in a computer functioning as the parameter search device 1, and includes a storage such as a hard disk drive (HDD) or a solid state drive (SSD), or the memory 104 in FIG. 5B.

The evaluation value calculation unit 121 calculates the evaluation value of the parameter indicating the operation condition using the data indicating the operation result of the mechanical device 2. For example, when the operation speed of the component included in the mechanical device 2 has a target value, the evaluation value calculation unit 121 calculates the evaluation value according to the above Formula (1) using the operation speed data included in the operation result read from the operation result storing unit 112. The evaluation value calculated by the evaluation value calculation unit 121 is stored in the evaluation value storing unit 122 in association with the parameter.

The evaluation value storing unit 122 stores the evaluation value of the parameter. The evaluation value storing unit 122 is a storage device included in a computer functioning as the parameter search device 1, and includes a storage such as an HDD or an SSD, the memory 104 in FIG. 5B, or the like.

The machine learning unit 131 generates a machine learning model for predicting the relationship between the parameters and the evaluation values in the search candidates on the basis of the operation result of the mechanical device 2, and predicts the relationship between the parameters and the evaluation values using the generated machine learning model. As illustrated in FIG. 6, the machine learning unit 131 includes a learning prediction unit 1311 and a prediction result storing unit 1312.

The learning prediction unit 1311 generates a search candidate for the parameter and the evaluation value on the basis of the operation result of the mechanical device 2, and causes the machine learning model to learn the relationship between the parameters and the evaluation values included in the operation result using the search candidates as training data. In addition, the learning prediction unit 1311 predicts the relationship between the parameters and the evaluation values in the search candidates using the machine learning model.

The prediction result storing unit 1312 stores a prediction result by the machine learning model. The prediction result storing unit 1312 is a storage device included in a computer functioning as the parameter search device 1, and includes a storage such as an HDD or an SSD, the memory 104 of FIG. 5B, or the like.

The search end determination unit 132 determines the end of the parameter search on the basis of the prediction result by the machine learning model. For example, the search end determination unit 132 refers to the actually measured value of the parameter having the largest evaluation value among the operation results as a search best, and refers to the number of search candidates exceeding the search best as the search end index. For example, the search end determination unit 132 determines the continuation of the parameter search when the search end index is equal to or larger than the threshold, and determines the end of the parameter search when the search end index is less than the threshold. When determining to continue the parameter search, the search end determination unit 132 reads the current prediction result from the prediction result storing unit 1312 and outputs the read result to the parameter determination unit 133.

In a case where it is determined to continue the parameter search on the basis of the prediction result by the machine learning model, the parameter determination unit 133 determines a parameter (search target) to be searched next. As illustrated in FIG. 6, the parameter determination unit 133 includes a search parameter calculation unit 1331 and a parameter command unit 1332.

The search parameter calculation unit 1331 calculates a parameter to be searched next. For example, the search parameter calculation unit 1331 calculates, as the next search target, a search candidate having the relationship between the parameters and the evaluation values closest to a target among the current prediction results regarding the relationship between the parameters and the evaluation values. When the Bayesian optimization is used for parameter search, the search parameter calculation unit 1331 refers to a search candidate having the largest value of an acquisition function in consideration of the average µ and the standard deviation σ of the search candidates as a next search target.

The parameter command unit 1332 commands the parameters calculated by the search parameter calculation unit 1331 to the mechanical device 2. For example, the parameter command unit 1332 transmits the parameters to be searched to the mechanical device 2 by a wireless or wired communication device (not illustrated in FIG. 6). The mechanical device 2 operates under the operation condition indicated by the parameters received from the parameter command unit 1332.

Although the case where the operation result storing unit 112, the evaluation value storing unit 122 has been described, and the prediction result storing unit 1312 are different storage units, these storage units may be provided in a storage area of one storage device.

Although the case where the operation result storing unit 112, the evaluation value storing unit 122, and the prediction result storing unit 1312 are the storage units included in the parameter search device 1 has been described, the operation result storing unit 112, the evaluation value storing unit 122, and the prediction result storing unit 1312 may be storage units included in an external storage device provided separately from the parameter search device 1. Note that the external storage device is a storage device capable of reading stored contents from the parameter search device 1 by wireless or wired communication.

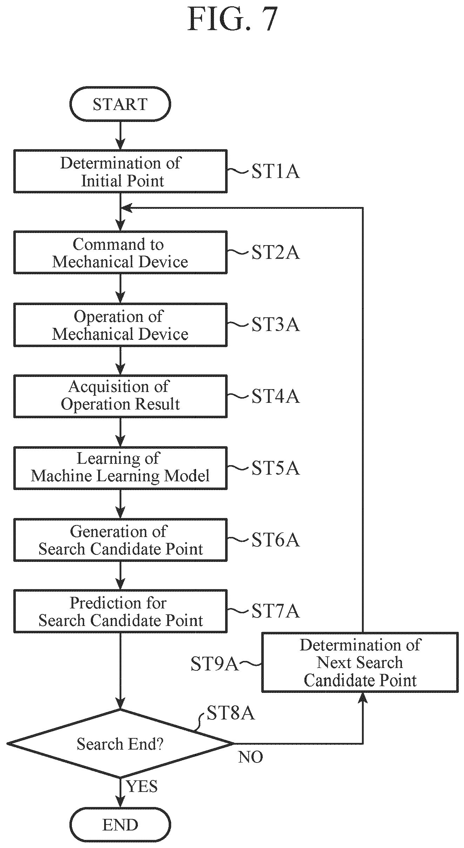

FIG. 7 is a flowchart illustrating a specific example of the parameter search method according to the first embodiment, and illustrates operations of the parameter search device 1 and the mechanical device 2 illustrated in FIG. 6.

First, the search parameter calculation unit 1331 determines an initial value (initial point) of a parameter to be searched (step ST1A). For example, the search parameter calculation unit 1331 randomly determines an initial value of a parameter to be searched from parameters indicating various operation conditions of the mechanical device 2. In addition, when a parameter having a high evaluation value has been previously known, the parameter may be set as an initial value.

Subsequently, the parameter command unit 1332 commands the initial value of the parameter to be searched calculated by the search parameter calculation unit 1331 to the mechanical device 2 (step ST2A). For example, the parameter command unit 1332 transmits an initial value of the parameter to be searched to the mechanical device 2 by a wireless or wired communication device and sets the initial value.

Upon receiving the initial value of the parameter from the parameter command unit 1332, the mechanical device 2 operates under the operation condition indicated by the received value of the parameter (step ST3A). When the mechanical device 2 starts operation, the operation result acquisition unit 111 sequentially acquires operation results from the mechanical device 2 (step ST4A). The operation result acquired by the operation result acquisition unit 111 is stored in the operation result storing unit 112. Subsequently, the evaluation value calculation unit 121 calculates an evaluation value of a parameter included in the operation result stored in the operation result storing unit 112. The evaluation value calculated by the evaluation value calculation unit 121 is stored in the evaluation value storing unit 122 in association with the parameter.

Next, the learning prediction unit 1311 causes the machine learning model to learn the relationship between the parameters and the evaluation values by using the parameters and the evaluation values stored in the evaluation value storing unit 122 as training data (step ST5A). For example, the evaluation value storing unit 122 stores data Dₜ={(x₁, s₁, y₁), ..., (xt, st, yt)} having, as elements, the parameter xt acquired before the number of search times t, the state quantity st indicating the state of the mechanical device 2, and the evaluation value yt.

The learning prediction unit 1311 learns the relationship between the parameter xt indicated by the data Dt read from the evaluation value storing unit 122, the state quantity st indicating the state of the mechanical device 2, and the evaluation value yₜ by the machine learning model. Note that the parameter xt and the evaluation value yt are essential as the training data, but the state quantity st is not essential.

The learning prediction unit 1311 generates a search candidate (search candidate point) for a parameter indicating the operation condition of the mechanical device 2 (step ST6A). For example, the learning prediction unit 1311 randomly generates a plurality of search candidate points by using the information indicating the parameters and the evaluation values stored in the evaluation value storing unit 122. Furthermore, in a case where the maximum value or the minimum value of the evaluation value of the parameter is known, the learning prediction unit 1311 may determine the search candidate points at equal intervals so as to form a lattice shape in a case where the known evaluation values and the parameters are illustrated as reference points. Furthermore, the learning prediction unit 1311 may generate a plurality of search candidate points using an experimental design method.

Subsequently, the learning prediction unit 1311 predicts the relationship between the parameters and the evaluation values at the search candidate point using the machine learning model (step ST7A). For example, when Bayesian optimization is used to determine a parameter to be searched, the learning prediction unit 1311 calculates a next search target by calculating a function value called an acquisition function.

The search end determination unit 132 determines whether or not to end the parameter search on the basis of the prediction result stored in the prediction result storing unit 1312 (step ST8A).

For example, the search end determination unit 132 compares the average µ of the search candidate points, the standard deviation σ, and the search best y_{best}, which are prediction results by the Gaussian process regression model that is a machine learning model, and refers to the number of search candidate points exceeding the search best y_{best} as the search end index St.

The search end index St is calculated using a calculation formula for each acquisition function.

For example, the search end index St using the UCB is expressed by the following Formula (2). In addition, the search end index St using EI is expressed by the following Formula (3). In the following Formulae (2) and (3), COUNT [] is a function that obtains the number of search candidate points satisfying the condition in []. Since it is expected that there is no search candidate point exceeding the search best y_{best} when the search end index St=0, the search end determination unit 132 can determine termination of the parameter search.

Although the case where the threshold is 0 has been described, any numerical value may be set as the threshold as long as the value is 0 or more. ${S}_{t} = COUNT \left[\left(μ+κσ-{y}_{best}\right)\geq 0\right]$ (2) ${S}_{t} = COUNT \left[\left(μ-{y}_{best}\right)/σ\geq 0\right]$ (3)

When it is determined that the search end index St is less than the threshold (step ST8A; YES), the search end determination unit 132 determines to end the parameter search. As a result, the series of processing illustrated in FIG. 7 is ended. On the other hand, when it is determined that the search end index St is equal to or more than the threshold (step ST8A; NO), the search end determination unit 132 determines to continue the parameter search, reads the current prediction result from the prediction result storing unit 1312, and outputs the read result to the parameter determination unit 133.

The search parameter calculation unit 1331 calculates a search candidate point having the largest value of the acquisition function in consideration of the average µ and the standard deviation σ of the search candidate points as a next search target (step ST9A). The parameter command unit 1332 commands the parameters to be searched calculated by the search parameter calculation unit 1331 to the mechanical device 2. The mechanical device 2 operates under the operation condition indicated by the parameters received from the parameter command unit 1332. Thereafter, the processing returns to step ST2A, and the above-described processing is repeated.

Methods for calculating a search target include Upper Confidence Bound (hereinafter, referred to as UCB) and Expected Improvement (hereinafter, referred to as EI). The search parameter calculation unit 1331 calculates the UCB from the function acq_{UCB} expressed by the following formula (4) using the average µ and the standard deviation σ of the search candidate points. In the following formula (4), κ is a hyperparameter. As the value of the hyperparameter κ increases, the tendency to search for a parameter that has not been obtained for increases. ${acq}_{UCB} \left(x\right) = μ + κσ$ (4)

The search parameter calculation unit 1331 may calculate EI from the function acq_{EI} expressed by the following formula (5) using the average µ and the standard deviation σ of the search candidate points. In the following formula (5), y_{best} is the search best obtained at a certain time point. Z is (µ-y_{best})/σ. Φ(Z) is a cumulative density function of the standard normal distribution, and φ(Z) is a probability density function of the standard normal distribution. The search parameter calculation unit 1331 determines a search candidate point having the largest value of these acquisition functions as the next search target. ${acq}_{EI} \left(x\right) = E \left[max\left(f\left(x\right)-{y}_{best},0\right)\right] = \left(μ-{y}_{best}\right) Φ \left(Z\right) + σφ \left(Z\right)$ (5)

As described above, the parameter search device 1 according to the first embodiment includes the operation result collection unit 11 that collects operation results, the evaluation value acquisition unit 12 that acquires evaluation values of parameters obtained using the operation results, and the parameter search unit 13 that searches for target parameters. The parameter search unit 13 predicts the relationship between the parameters and the evaluation values using the machine learning model, refers to the number of search candidates whose evaluation value exceeds the search best as the search end index, and determines the next search target from the search candidates on the basis of the evaluation value in a case where the parameter search is continued on the basis of the comparison result between the search end index and the threshold. As a result, the parameter search device 1 can efficiently search for the parameter indicating the target operation condition of the mechanical device 2 without determining a certain number of search times or a certain search time.

In the parameter search device 1 according to the first embodiment, the parameter search unit 13 learns a machine learning model. Since the parameter search unit 13 generates the machine learning model each time using the actually measured data of the operation result of the mechanical device 2, the machine learning model depending on the current situation of the mechanical device 2 can be obtained.

The parameter search method according to the first embodiment includes the steps of: collecting, by the operation result collection unit 11, an operation result; acquiring, by the evaluation value acquisition unit 12, an evaluation value of a parameter obtained by using the operation result; and searching, by the parameter search unit 13, for a target parameter. In a case where the parameter search unit 13 predicts the relationship between the parameters and the evaluation values using the machine learning model, refers to the number of search candidates whose evaluation values exceed the search best as the search end index, and continues the search for the parameter on the basis of the comparison result between the search end index and the threshold, the next search target is determined from the search candidates on the basis of the evaluation values. By executing the method, it is possible to efficiently search for a parameter indicating a target operation condition of the mechanical device 2 without defining a certain number of search times or a certain search time.

### Second Embodiment.

In the first embodiment, the relationship between the parameters indicating the operation condition of the mechanical device 2 and the evaluation values is learned, and the parameter is searched for on the basis of these relationships. On the other hand, in a second embodiment, in addition to the parameters and the evaluation values, data regarding the constraint condition to be satisfied in the operation of the mechanical device 2 is collected, and the parameter is searched for on the basis of the relationship among the parameters, the evaluation values, and the constraint conditions.

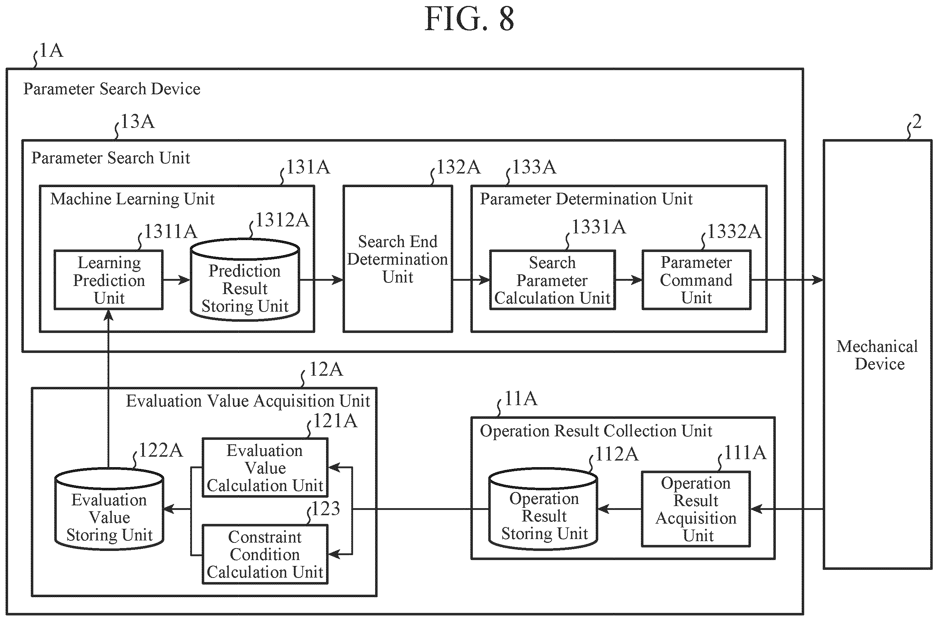

FIG. 8 is a block diagram illustrating a configuration of a parameter search device 1A according to the second embodiment. In FIG. 8, the parameter search device 1A includes an operation result collection unit 11A, an evaluation value acquisition unit 12A, and a parameter search unit 13A. The operation result collection unit 11A includes an operation result acquisition unit 111A and an operation result storing unit 112A. The evaluation value acquisition unit 12A includes an evaluation value calculation unit 121A, an evaluation value storing unit 122A, and a constraint condition calculation unit 123. The parameter search unit 13A includes a machine learning unit 131A, a search end determination unit 132A, and a parameter determination unit 133A.

The operation result acquisition unit 111A acquires an operation result further including a constraint condition in the operation of the mechanical device 2 in addition to the parameter indicating the operation condition of the mechanical device 2. The constraint condition is a condition to be satisfied in the operation of the mechanical device 2, and is different from the evaluation value of the parameter in that the constraint condition is necessarily satisfied in the operation of the mechanical device 2.

For example, when the constraint condition is a value to be satisfied by the parameter, the operation result acquisition unit 111A may acquire a detection value detected by a sensor group (temperature sensor, pressure sensor, acceleration sensor, gyro sensor, or humidity sensor) disposed in the mechanical device 2 as the constraint condition. In addition, the operation result acquisition unit 111A may acquire, as the constraint condition, a physical quantity that defines the operation condition and is calculated using these detection values.

For example, in a case where an actually measured value of a parameter indicating the operation condition of the mechanical device 2 is cₘₑₐₛᵤᵣₑ and a threshold to be satisfied by the parameter is cₜₕᵣₑ, the constraint condition c can be calculated using the following Formula (6). The constraint condition c expressed by the following Formula (6) is a condition that the actually measured value cₘₑₐₛᵤᵣₑ is equal to or larger than the threshold cₜₕᵣₑ. When the actually measured value cₘₑₐₛᵤᵣₑ is less than the threshold cₜₕᵣₑ, the sign may be reversed. $c = {c}_{measure} - {c}_{thre}$ (6)

**In** addition, when the constraint condition is a condition that the actually measured value of the parameter needs to fall within a predetermined value range, assuming that the upper limit value of the predetermined range is cᵤₚₚₑᵣ and the lower limit value is c_{lower}, a constraint condition c¹ represented by the following Formula (7) and a constraint condition c² represented by the following Formula (8) may be calculated. Note that, in the second embodiment, the number of constraint conditions is not limited. For example, in a case where k is a natural number, the parameter search device 1A may search for a parameter of which the k-th constraint condition c^{k} is 0 or more. ${c}^{1} = {c}_{upper} - {c}_{measure}$ (7) ${c}^{2} = {c}_{measure} - {c}_{lower}$ (8)

The operation result storing unit 112A stores the operation result acquired by the operation result acquisition unit 111A. The operation result storing unit 112A is a storage device included in a computer functioning as the parameter search device 1A, and includes a storage such as an HDD or an SSD, the memory 104 of FIG. 5B, or the like.

The evaluation value acquisition unit 12A acquires a constraint condition in addition to the evaluation value of the parameter obtained using the operation result. The constraint condition calculation unit 123 calculates a constraint condition to be satisfied in the operation of the mechanical device 2 using the operation result acquired by the operation result acquisition unit 111A. For example, the constraint condition calculation unit 123 calculates the constraint condition according to the above Formula (6) or the above Formulas (7) and (8) using the operation result read from the operation result storing unit 112A. The constraint condition calculated by the constraint condition calculation unit 123 is stored in the evaluation value storing unit 122A in association with the parameters and the evaluation values.

The evaluation value storing unit 122A stores parameters, evaluation values, and constraint conditions. The evaluation value storing unit 122A is a storage device included in a computer functioning as the parameter search device 1, and includes a storage such as an HDD or an SSD, the memory 104 of FIG. 5B, or the like.

The machine learning unit 131A generates a machine learning model for predicting the relationship among the parameters, the evaluation values, and the constraint conditions in the search candidates on the basis of the operation result of the mechanical device 2, and predicts the relationship among the parameters, the evaluation values, and the constraint conditions using the machine learning model. As illustrated in FIG. 8, the machine learning unit 131A includes a learning prediction unit 1311A and a prediction result storing unit 1312A.

The learning prediction unit 1311A generates a search candidate for a parameter and a constraint condition on the basis of the operation result of the mechanical device 2, and causes the machine learning model to learn a relationship among the parameters included in the operation result, the constraint conditions, and the evaluation values using the search candidates as training data. In addition, the learning prediction unit 1311A predicts the relationship among the parameters, the constraint conditions, and the evaluation values in the search candidates using the machine learning model.

For example, the learning prediction unit 1311A learns the relationship between the parameters and the constraint conditions by using a machine learning model, and predicts the relationship between the parameters satisfying the constraint conditions and the evaluation values using the machine learning model. By using the prediction result, the parameter search device 1A can search for a parameter having a high evaluation value while satisfying the constraint condition.

In addition, an evaluation value in consideration of a constraint condition may be calculated. For example, a penalty function in which a value increases as a distance from a certain threshold falls outside the range indicated by the constraint condition, a barrier function in which a value increases as a distance from the certain threshold falls within the range indicated by the constraint condition, or a term obtained by combining the values of these functions may be added to the evaluation value function indicating the evaluation value.

For example, the learning prediction unit 1311A may calculate the average µ and the standard deviation σ of the search candidate points that are the prediction results of the relationship between the parameters and the evaluation values using the Gaussian process regression model, calculate the average µₖ and the standard deviation σₖ that are the prediction results of the relationship of the constraint condition with respect to the parameters at the search candidate points, and calculate the acquisition function using these prediction results similarly to the first embodiment.

An example of the acquisition function in consideration of the constraint condition is Expected Improvement with Constraints (hereinafter, referred to as EIC).

EIC can be expressed by a function acq_{EIC} of the following formula (9).

As in the first embodiment, a search parameter calculation unit 1331A calculates a search candidate point having the maximum value of the acquisition function acq_{EIC}, and outputs the calculated search candidate point to a parameter command unit 1332A as a next search target. ${acq}_{EIC} \left(x\right) = {acq}_{EIC} \left(x\right) {\prod }_{k = 1}^{K} Φ \left({μ}_{k}/{σ}_{k}\right)$ (9)

The prediction result storing unit 1312A stores a prediction result by the machine learning model. The prediction result storing unit 1312A is a storage device included in a computer functioning as the parameter search device 1A, and includes a storage such as an HDD or an SSD, the memory 104 of FIG. 5B, or the like.

The search end determination unit 132A determines the end of the parameter search on the basis of the prediction result by the machine learning model. For example, the learning prediction unit 1311A predicts the relationship with the parameters using the Gaussian process regression model for the evaluation values and the constraint conditions.

By using the average µ and the standard deviation σ as the prediction result for the evaluation value using the Gaussian process regression model, the average µₖ and the standard deviation σₖ as the prediction result for the constraint condition using the Gaussian process regression model, the search best y_{best}, and the threshold cₖ regarding the constraint condition, the search candidate point satisfying the constraint condition can be expressed by the following Formula (10).

As in the first embodiment, the search end determination unit 132A refers to the number of search candidates exceeding the search best y_{best} as the search end index. $\left({μ}_{k}-{c}_{k}\right) / {σ}_{k} \geq 0$ (10)

For example, the search end determination unit 132A determines to continue the parameter search when the search end index is equal to or greater than a threshold, and determines to end the parameter search when the search end index is less than the threshold. When determining to continue the parameter search, the search end determination unit 132A reads the current prediction result from the prediction result storing unit 1312A and outputs the read result to the parameter determination unit 133A.

In a case where it is determined to continue the parameter search on the basis of the prediction result by the machine learning model, the parameter determination unit 133A determines a parameter (search target) to be searched next. As illustrated in FIG. 8, the parameter determination unit 133A includes a search parameter calculation unit 1331A and a parameter command unit 1332A.

The search parameter calculation unit 1331A calculates a parameter to be searched next. For example, the search parameter calculation unit 1331A calculates, as the next search target, a search candidate having the relationship between the parameters, the evaluation values, and the constraint conditions closest to the target among the current prediction results regarding the relationship among the parameters, the evaluation values, and the constraint conditions. When the Bayesian optimization is used for parameter search, a search candidate point having the largest value of the acquisition function in consideration of the average µ and the standard deviation σ of the search candidate points is the next search target.

The parameter command unit 1332A commands the parameters calculated by the search parameter calculation unit 1331A to the mechanical device 2. For example, the parameter command unit 1332A transmits a parameter to be searched to the mechanical device 2 by a wireless or wired communication device (not illustrated in FIG. 8). The mechanical device 2 operates under the operation condition indicated by the parameter received from the parameter command unit 1332A.

Although the case where the operation result storing unit 112A, the evaluation value storing unit 122A, and the prediction result storing unit 1312A are different storage units has been described, these storage units may be provided in a storage area of one storage device.

In addition, the case where the operation result storing unit 112A, the evaluation value storing unit 122A, and the prediction result storing unit 1312A are storage units included in the parameter search device 1A has been described, but the operation result storing unit, the evaluation value storing unit, and the prediction result storing unit may be storage units included in an external storage device provided separately from the parameter search device 1A.

Note that the external storage device is a storage device capable of reading stored contents from the parameter search device 1A by wireless or wired communication.

As described above, in the parameter search device 1A according to the second embodiment, the operation result collection unit 11A collects the operation result further including the constraint condition to be satisfied in the operation of the mechanical device 2. When a plurality of search candidates for parameters, constraint conditions, and evaluation values are input, the parameter search unit 13A predicts a relationship among the parameters, the evaluation values, and the constraint conditions in the search candidates by using a machine learning model that outputs a prediction value indicating a relationship among the parameters, the evaluation values, and the constraint conditions in the search candidate. As a result, the parameter search device 1A can efficiently search for the parameter indicating the target operation condition of the mechanical device 2 without determining a certain number of search times or a certain search time.

### Third Embodiment.

A third embodiment searches for a parameter indicating an operation condition of the mechanical device 2 on the basis of data preliminarily acquired for a simulator that simulates the operation of the mechanical device 2 or the mechanical device 2.

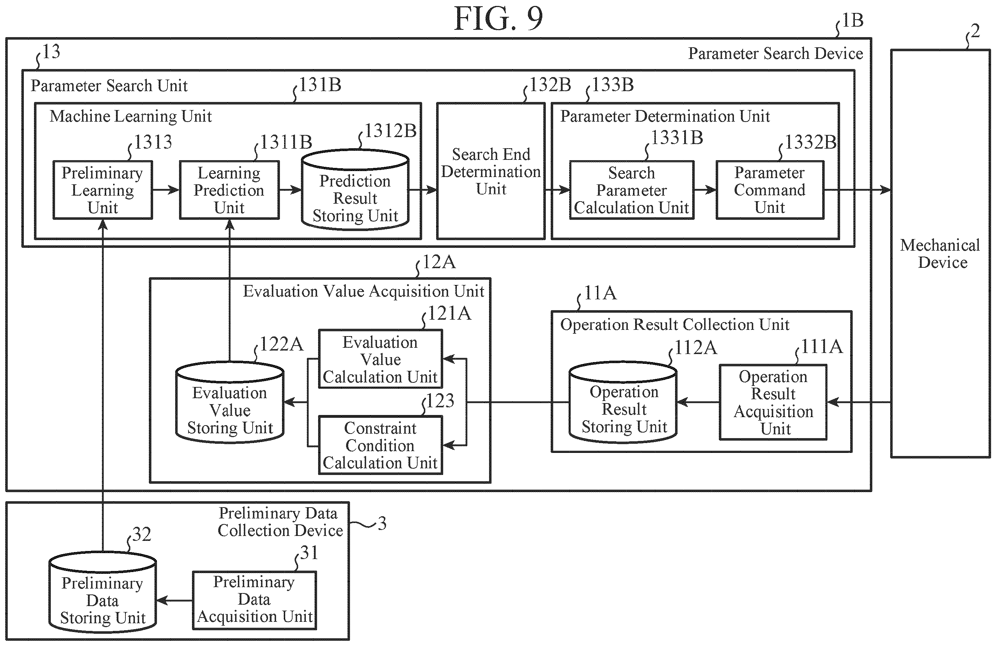

FIG. 9 is a block diagram illustrating a configuration of a parameter search device 1B according to the third embodiment. In FIG. 9, the parameter search device 1B causes the machine learning model to learn the relationship among the parameters indicating the operation condition of the mechanical device 2, the evaluation values, and the constraint conditions using the preliminary data collected by a preliminary data collection device 3. The parameter search device 1B searches for the target operation condition of the mechanical device 2 using the prediction result of the relationship among the parameters, the evaluation values, and the constraint conditions by the machine learning model.

The preliminary data collection device 3 acquires data on the characteristics of the mechanical device 2 before the parameter search device 1B searches for parameters. The preliminary data collection device 3 includes a preliminary data acquisition unit 31 and a preliminary data storing unit 32. For example, as illustrated in FIG. 9, the preliminary data collection device 3 is an external device provided separately from the parameter search device 1B. The preliminary data collection device 3 may be an internal device of the parameter search device 1B.

The preliminary data acquisition unit 31 acquires data on the characteristics of the mechanical device 2. For example, the data on the characteristics of the mechanical device 2 is data used to predict the relationship between the parameters and the evaluation values or the relationship between the parameters and the constraint conditions. The parameter search device 1B can predict the relationship between the parameters and the evaluation values or the relationship between the parameters and the constraint conditions by using the data regarding the characteristic of the mechanical device 2 as the training data.

For example, the preliminary data acquisition unit 31 acquires data on the characteristics of the mechanical device 2 from the actual machine of the mechanical device 2 or a simulator that simulates the operation of the mechanical device 2. The preliminary data acquired by the preliminary data acquisition unit 31 is stored in the preliminary data storing unit 32.

The preliminary data storing unit 32 is a storage device that stores the preliminary data acquired by the preliminary data acquisition unit 31. The preliminary data storing unit 32 may be a storage device included in the preliminary data collection device 3, or may be an external storage device provided separately from the preliminary data collection device 3. For example, the preliminary data storing unit 32 may be a cloud device that can be read and written from the parameter search device 1B and the preliminary data acquisition unit 31 via a network.

The parameter search device 1B includes an operation result collection unit 11A, an evaluation value acquisition unit 12A, and a parameter search unit 13B. The operation result collection unit 11A includes an operation result acquisition unit 111A and an operation result storing unit 112A. The evaluation value acquisition unit 12A includes an evaluation value calculation unit 121, an evaluation value storing unit 122A, and a constraint condition calculation unit 123. The parameter search unit 13B includes a machine learning unit 131B, a search end determination unit 132B, and a parameter determination unit 133B.

The operation result acquisition unit 111A acquires an operation result further including a constraint condition in the operation of the mechanical device 2 in addition to the parameter indicating the operation condition of the mechanical device 2. The operation result storing unit 112A stores the operation result acquired by the operation result acquisition unit 111A.

The evaluation value acquisition unit 12A acquires a constraint condition in addition to the evaluation value of the parameter obtained using the operation result. The constraint condition calculation unit 123 calculates a constraint condition to be satisfied in the operation of the mechanical device 2 using the operation result acquired by the operation result acquisition unit 111A.

The evaluation value storing unit 122A stores parameters, evaluation values, and constraint conditions. The evaluation value storing unit 122A is a storage device included in a computer functioning as the parameter search device 1, and includes a storage such as an HDD or an SSD, the memory 104 of FIG. 5B, or the like.

The machine learning unit 131B generates a machine learning model for predicting the relationship among the parameters, the evaluation values, and the constraint conditions in the search candidates on the basis of the operation result of the mechanical device 2, and predicts the relationship among the parameters, the evaluation values, and the constraint conditions using the machine learning model.

As illustrated in FIG. 9, the machine learning unit 131B includes a learning prediction unit 1311B, a prediction result storing unit 1312B, and a preliminary learning unit 1313.

The learning prediction unit 1311B generates search candidate points for the parameters and the constraint conditions on the basis of the operation result of the mechanical device 2, and causes the machine learning model to learn the relationship among the parameters, the constraint conditions, and the evaluation values using the search candidate points as training data. Furthermore, the learning prediction unit 1311B generates the above machine learning model using the preliminary learning model learned by the preliminary learning unit 1313.

For example, the above machine learning model and the preliminary learning model are the same type of model. The learning prediction unit 1311B further learns the relationship among the parameters, the evaluation values, and the constraint conditions by the preliminary learning model using the parameters, the evaluation values, and the constraint conditions stored in the evaluation value storing unit 122A, thereby using the preliminary learning model after learning as the above machine learning model.

The parameter search device 1B can efficiently search for the parameter indicating the operation condition of the mechanical device 2 even if the data indicating the operation result of the mechanical device 2 is small by using the preliminarily learned model.

The learning prediction unit 1311B predicts the relationship among the parameters, the constraint conditions, and the evaluation values in the search candidates using the machine learning model.

For example, the learning prediction unit 1311B learns the relationship between the parameters and the constraint conditions by using a machine learning model, and predicts the relationship between the parameters satisfying the constraint conditions and the evaluation values using the machine learning model. By using this prediction result, the parameter search device 1B can search for a parameter having a high evaluation value while satisfying the constraint condition.

The prediction result storing unit 1312B stores a prediction result by the machine learning model. The prediction result storing unit 1312B is a storage device included in a computer functioning as the parameter search device 1B, and includes a storage such as an HDD or an SSD, the memory 104 of FIG. 5B, or the like.

The preliminary learning unit 1313 learns the relationship among the parameters, the evaluation values, and the constraint conditions in the search candidates by using the preliminary data stored in the preliminary data storing unit 32 by the preliminary learning model. The preliminary learning model that has learned the relationship among the parameters, the evaluation values, and the constraint conditions is output to the learning prediction unit 1311B.

The search end determination unit 132B determines the end of the parameter search on the basis of the prediction result by the machine learning model. For example, the learning prediction unit 1311B predicts the relationship with the parameters using the Gaussian process regression model for the evaluation values and the constraint conditions. For example, the search end determination unit 132B determines to continue the parameter search when the search end index is equal to or greater than a threshold, and determines to end the parameter search when the search end index is less than the threshold. When determining to continue the parameter search, the search end determination unit 132B reads the current prediction result from the prediction result storing unit 1312B and outputs the read result to the parameter determination unit 133B.

In a case where it is determined to continue the parameter search on the basis of the prediction result by the machine learning model, the parameter determination unit 133B determines a parameter to be searched next. As illustrated in FIG. 9, the parameter determination unit 133B includes a search parameter calculation unit 1331B and a parameter command unit 1332B.

The search parameter calculation unit 1331B calculates a parameter to be searched next.

For example, the search parameter calculation unit 1331B calculates, as the next search target, a search candidate having the relationship among the parameters, the evaluation values, and the constraint conditions closest to the target among the current prediction results regarding the relationship among the parameters, the evaluation values, and the constraint conditions.

When the Bayesian optimization is used for parameter search, the search parameter calculation unit 1331B refers to a search candidate having the largest value of the acquisition function in consideration of the average µ and the standard deviation σ of the search candidates as a next search target.

The parameter command unit 1332B commands the parameters calculated by the search parameter calculation unit 1331B to the mechanical device 2. For example, the parameter command unit 1332B transmits a parameter to be searched to the mechanical device 2 by a wireless or wired communication device (not illustrated in FIG. 9). The mechanical device 2 operates under the operation condition indicated by the parameter received from the parameter command unit 1332B.

Although the case where the operation result storing unit 112A, the evaluation value storing unit 122A has been described, and the prediction result storing unit 1312B are different storage units, these storage units may be provided in a storage area of one storage device.

In addition, the case where the operation result storing unit 112A, the evaluation value storing unit 122A, and the prediction result storing unit 1312B are storage units included in the parameter search device 1B has been described. However, the operation result storing unit, the evaluation value storing unit, and the prediction result storing unit may be storage units included in an external storage device provided separately from the parameter search device 1B.

Note that the external storage device is a storage device capable of reading stored contents from the parameter search device 1B by wireless or wired communication.

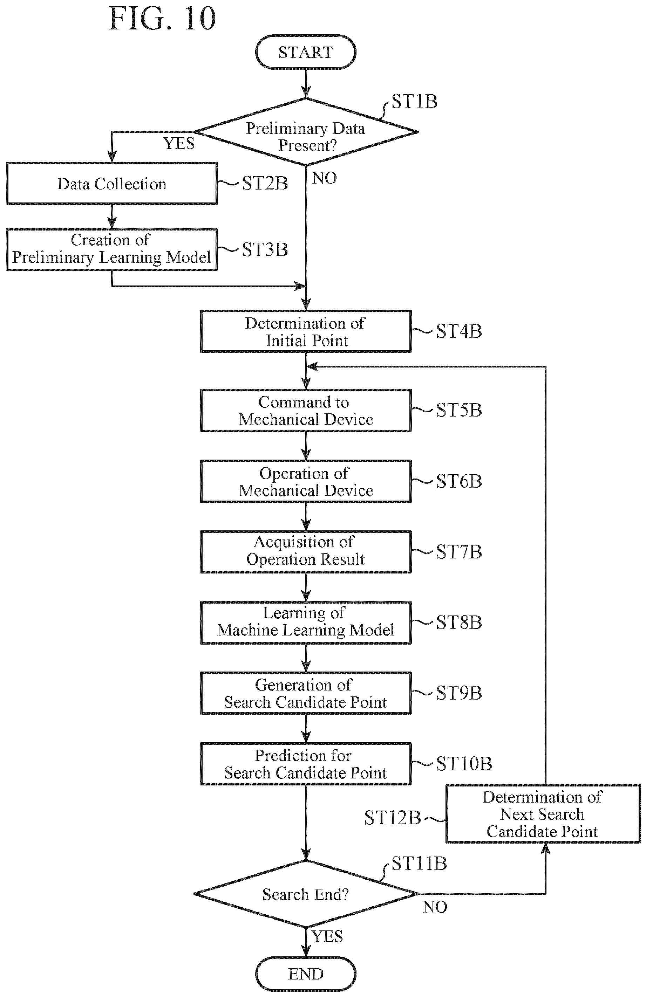

FIG. 10 is a flowchart illustrating a parameter search method according to the third embodiment, and illustrates operations of the parameter search device 1B, the mechanical device 2, and the preliminary data collection device 3.

First, the preliminary data collection device 3 checks whether or not preliminary data is present in a predetermined storage location (step ST1B). For example, the predetermined storage location may be a cloud on a network.

If there is preliminary data (step ST1B; YES), the preliminary data collection device 3 accesses the above storage location and collects the preliminary data from the storage location (step ST2B). For example, the preliminary data acquisition unit 31 accesses a cloud on the network for communication and downloads the preliminary data. The preliminary data acquired by the preliminary data acquisition unit 31 is stored in the preliminary data storing unit 32.

Next, the preliminary learning unit 1313 uses the preliminary data read from the preliminary data storing unit 32 as training data, and learns the relationship among the parameters indicating the operation condition of the mechanical device 2, the evaluation values, and the constraint conditions by using the preliminary learning model (step ST3B). The preliminary learning model that has learned the relationship among the parameters, the evaluation values, and the constraint conditions is output to the learning prediction unit 1311B.

When there is no preliminary data in the above storage location (step ST1B; NO), or when the preliminary learning model is generated in step ST3B, the search parameter calculation unit 1331B determines an initial value (initial point) of a parameter to be searched (step ST4B). For example, the search parameter calculation unit 1331B randomly determines an initial value of a parameter to be searched from parameters indicating various operation conditions of the mechanical device 2. In addition, when a parameter having a high evaluation value has been previously known, the parameter may be set as an initial value.

Subsequently, the parameter command unit 1332B commands the initial value of the parameter to be searched calculated by the search parameter calculation unit 1331B to the mechanical device 2 (step ST5B). For example, the parameter command unit 1332B transmits an initial value of the parameter to be searched to the mechanical device 2 by a wireless or wired communication device and sets the initial value.

Upon receiving the initial value of the parameter from the parameter command unit 1332B, the mechanical device 2 operates under the operation condition indicated by the received value of the parameter (step ST6B). When the mechanical device 2 starts operation, the operation result acquisition unit 111A sequentially acquires operation results from the mechanical device 2 (step ST7B). The operation result acquired by the operation result acquisition unit 111A is stored in the operation result storing unit 112A.

The evaluation value calculation unit 121A calculates an evaluation value of a parameter included in the operation result stored in the operation result storing unit 112A. The evaluation value calculated by the evaluation value calculation unit 121A is stored in the evaluation value storing unit 122A in association with the parameter. The constraint condition calculation unit 123 calculates a constraint condition using the operation result stored in the operation result storing unit 112A. The constraint condition calculated by the constraint condition calculation unit 123 is stored in the evaluation value storing unit 122A in association with the parameters.

The learning prediction unit 1311B causes the machine learning model (or the preliminary learning model) to learn the relationship among the parameters, the evaluation values, and the constraint conditions by using the parameters, the evaluation values, and the constraint conditions stored in the evaluation value storing unit 122A as training data (step ST8B). The learning prediction unit 1311B generates a search candidate point of a parameter indicating the operation condition of the mechanical device 2 (step ST9B).

Next, the learning prediction unit 1311B predicts the relationship among the parameters, the evaluation values, and the constraint conditions at the search candidate point using the machine learning model (or the preliminary learning model) (step ST10B). For example, in a case where the Bayesian optimization is used to determine the parameters to be searched, the learning prediction unit 1311B calculates a function value called an acquisition function, and calculates the next search target using the acquisition function value.

The search end determination unit 132B determines whether or not to end the parameter search on the basis of the prediction result stored in the prediction result storing unit 1312B (step ST11B). When it is determined that the search end index is less than the threshold (step ST11B; YES), the search end determination unit 132B determines to end the parameter search. As a result, a series of processing illustrated in FIG. 10 ends. On the other hand, when it is determined that the search end index is equal to or more than the threshold (step ST11B; NO), the search end determination unit 132B determines to continue the parameter search, reads the current prediction result from the prediction result storing unit 1312B, and outputs the read result to the parameter determination unit 133B.

The search parameter calculation unit 1331B calculates a search candidate point having the largest value of the acquisition function in consideration of the average µ and the standard deviation σ of the search candidate points as a next search target (step ST12B). The parameter command unit 1332B commands the parameters to be searched calculated by the search parameter calculation unit 1331B to the mechanical device 2. The mechanical device 2 operates under the operation condition indicated by the parameter received from the parameter command unit 1332B.

Thereafter, the processing returns to step ST5B, and the above-described processing is repeated.

Note that the parameter search device 1B according to the third embodiment is obtained by adding the preliminary learning unit 1313 to the configuration of the second embodiment, but the preliminary learning unit 1313 may be added to the configuration of the first embodiment.

For example, the preliminary learning unit 1313 learns the relationship between the parameters and the evaluation values in the search candidate by using the preliminary data stored in the preliminary data storing unit 32 by using the preliminary learning model. The preliminary learning model that has learned the relationship between the parameters and the evaluation values is output to the learning prediction unit 1311B. The learning prediction unit 1311B further learns the relationship between the parameters and the evaluation values by using the preliminary learning model using the parameters and the evaluation values stored in the evaluation value storing unit 122A, thereby using the preliminary learning model after learning as the above machine learning model.

The parameter search device 1B can efficiently search for the parameter indicating the operation condition of the mechanical device 2 even if the data indicating the operation result of the mechanical device 2 is small by using the preliminarily learned model.

As described above, in the parameter search device 1B according to the third embodiment, the parameter search unit 13B acquires the preliminary learning model in which the relationship between the parameters and the evaluation values has been preliminarily learned, and learns the machine learning model using the preliminary learning model.

If the machine learning model has a small amount of training data, learning becomes insufficient and prediction cannot be performed with high accuracy. Therefore, the efficiency of parameter search using a machine learning model for which learning is insufficient also deteriorates. On the other hand, by using the preliminarily learned model, the parameter search device 1B can efficiently search for the parameter indicating the operation condition of the mechanical device 2 even if the data indicating the operation result of the mechanical device 2 is small.

In the parameter search device 1B according to the third embodiment, the parameter search unit 13B acquires a preliminary learning model in which the relationship among the parameters, the constraint conditions, and the evaluation values has been preliminarily learned, and learns the machine learning model using the preliminary learning model.

By using the preliminarily learned model, the parameter search device 1B can efficiently search for the parameter indicating the operation condition of the mechanical device 2 even if there is little data indicating the operation result of the mechanical device 2.

### Fourth Embodiment.

A fourth embodiment predicts a relationship among parameters indicating operation conditions of a mechanical device, evaluation values, and external information detected by an external sensor provided in the mechanical device, or a relationship among parameters, constraint conditions, and external information using the external information in addition to an operation result of the mechanical device.

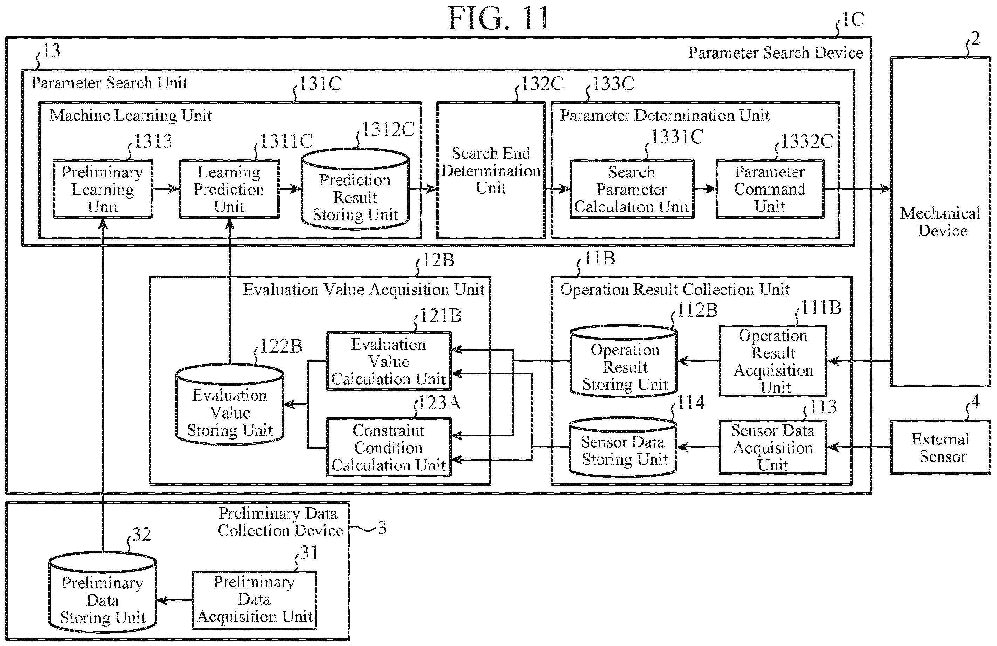

FIG. 11 is a block diagram illustrating a configuration of a parameter search device 1C according to the fourth embodiment. In FIG. 11, the parameter search device 1C learns the relationship among the parameters indicating the operation conditions of the mechanical device 2, the evaluation values, and the constraint conditions using the preliminary data collected by the preliminary data collection device 3 and the external information detected by the external sensor 4. The parameter search device 1C searches for the target operation condition of the mechanical device 2 using the prediction result of the relationship among the parameters, the evaluation values, and the constraint conditions.

The preliminary data collection device 3 acquires data on the characteristics of the mechanical device 2 before the parameter search device 1C searches for parameters. The preliminary data collection device 3 includes the preliminary data acquisition unit 31 and the preliminary data storing unit 32. For example, as illustrated in FIG. 11, the preliminary data collection device 3 is an external device provided separately from the parameter search device 1C.

Further, the preliminary data collection device 3 may be an internal device of the parameter search device 1C.

The preliminary data acquisition unit 31 acquires data on the characteristics of the mechanical device 2. For example, the data on the characteristics of the mechanical device 2 is data used to predict the relationship between the parameters and the evaluation values or the relationship between the parameters and the constraint conditions. The parameter search device 1C can predict the relationship between the parameters and the evaluation values or the relationship between the parameters and the constraint conditions by using the data on the characteristics of the mechanical device 2 as the training data.

The preliminary data storing unit 32 is a storage device that stores the preliminary data acquired by the preliminary data acquisition unit 31. The preliminary data storing unit 32 may be a storage device included in the preliminary data collection device 3, or may be an external storage device provided separately from the preliminary data collection device 3. For example, the preliminary data storing unit 32 may be a cloud device capable of reading and writing from the parameter search device 1C and the preliminary data acquisition unit 31 via a network.

The external sensor 4 is a sensor provided around or inside the mechanical device 2, and detects external information on the mechanical device 2. The external information is information including at least one of peripheral information of the mechanical device 2 or information on an operation task. For example, when the mechanical device 2 is a machining machine, the external information is information indicating a temperature, vibration, or a shape of a workpiece of the mechanical device 2. These are information that affect the smoothness of the processing shape and the processing speed of the workpiece.

The parameter search device 1C includes an operation result collection unit 11B, an evaluation value acquisition unit 12B, and a parameter search unit 13C. The operation result collection unit 11B includes an operation result acquisition unit 111B, an operation result storing unit 112B, a sensor data acquisition unit 113, and a sensor data storing unit 114. The evaluation value acquisition unit 12B includes an evaluation value calculation unit 121B, an evaluation value storing unit 122B, and a constraint condition calculation unit 123A. The parameter search unit 13C includes a machine learning unit 131C, a search end determination unit 132C, and a parameter determination unit 133C.

The operation result acquisition unit 111A acquires an operation result further including a constraint condition in the operation of the mechanical device 2 in addition to the parameter indicating the operation condition of the mechanical device 2. The operation result storing unit 112A stores the operation result acquired by the operation result acquisition unit 111A.

The sensor data acquisition unit 113 acquires external information from the external sensor 4. For example, the sensor data acquisition unit 113 acquires external information from the external sensor 4 by wired or wireless communication, and stores the acquired external information in the sensor data storing unit 114. The sensor data storing unit 114 stores the external information acquired by the sensor data acquisition unit 113.

The evaluation value acquisition unit 12B acquires a constraint condition in addition to the evaluation value of the parameter obtained using the operation result of the mechanical device 2 and the external information. The evaluation value calculation unit 121B calculates the evaluation value of the parameter using the operation result, and calculates the evaluation value of the parameter using the external information. Similarly, the constraint condition calculation unit 123A calculates a constraint condition to be satisfied in the operation of the mechanical device 2 using the operation result, and calculates the constraint condition using the external information.

The evaluation value storing unit 122B stores parameters, evaluation values, and constraint conditions. The evaluation value storing unit 122B is a storage device included in a computer functioning as the parameter search device 1, and includes a storage such as an HDD or an SSD, the memory 104 of FIG. 5B, or the like.

The machine learning unit 131C generates a machine learning model for predicting the relationship among the parameters, the evaluation values, and the constraint conditions in the search candidates on the basis of the operation result of the mechanical device 2, and predicts the relationship among the parameters, the evaluation values, and the constraint conditions using the machine learning model.

As illustrated in FIG. 11, the machine learning unit 131C includes a learning prediction unit 1311C, a prediction result storing unit 1312C, and a preliminary learning unit 1313.

The learning prediction unit 1311C generates a search candidate for a parameter and a constraint condition on the basis of the operation result of the mechanical device 2, and causes the machine learning model to learn a relationship among the parameters included in the operation results, the constraint conditions, and the evaluation values using the search candidates as training data.

Furthermore, the learning prediction unit 1311C generates the above machine learning model using the preliminary learning model learned by the preliminary learning unit 1313.

For example, the above machine learning model and the preliminary learning model are the same type of model. The learning prediction unit 1311C uses the learned preliminary learning model as the above machine learning model by further learning the relationship among the parameters, the evaluation values, and the constraint conditions by the preliminary learning model using the parameters, the evaluation values, and the constraint conditions stored in the evaluation value storing unit 122C.

The parameter search device 1C can efficiently search for the parameter indicating the operation condition of the mechanical device 2 even if the data indicating the operation result of the mechanical device 2 is small by using the preliminarily learned model.

The learning prediction unit 1311C predicts the relationship among the parameters, the constraint conditions, and the evaluation values in the search candidates using the machine learning model.

For example, the learning prediction unit 1311C learns the relationship between the parameters and the constraint conditions by using a machine learning model, and predicts the relationship between the parameters satisfying the constraint conditions and the evaluation values using the machine learning model. By using the prediction result, the parameter search device 1C can search for a parameter having a high evaluation value while satisfying the constraint condition.

The prediction result storing unit 1312C stores a prediction result by the machine learning model. The prediction result storing unit 1312C is a storage device included in a computer functioning as the parameter search device 1C, and includes a storage such as an HDD or an SSD, the memory 104 of FIG. 5B, or the like.

The preliminary learning unit 1313 learns the relationship among the parameters, the evaluation values, and the constraint conditions in the search candidates by using the preliminary data stored in the preliminary data storing unit 32 by the preliminary learning model. The preliminary learning model that has learned the relationship among the parameters, the evaluation values, and the constraint conditions is output to the learning prediction unit 1311C.

The search end determination unit 132C determines the end of the parameter search on the basis of the prediction result by the machine learning model. For example, the learning prediction unit 1311C predicts the relationship with the parameters using the Gaussian process regression model for the evaluation values and the constraint conditions. For example, the search end determination unit 132C determines to continue the parameter search when the search end index is equal to or larger than the threshold, and determines to end the parameter search when the search end index is less than the threshold. When determining to continue the parameter search, the search end determination unit 132C reads the current prediction result from the prediction result storing unit 1312C and outputs the read result to the parameter determination unit 133C.

In a case where it is determined to continue the parameter search on the basis of the prediction result by the machine learning model, the parameter determination unit 133C determines a parameter to be searched next. As illustrated in FIG. 11, the parameter determination unit 133C includes a search parameter calculation unit 1331C and a parameter command unit 1332C.

The search parameter calculation unit 1331C calculates a parameter to be searched next.

For example, the search parameter calculation unit 1331C calculates, as the next search target, a search candidate point at which the relationship among the parameters, the evaluation values, and the constraint conditions is closest to the target among the current prediction results regarding the relationship among the parameters, the evaluation values, and the constraint conditions.

When the Bayesian optimization is used for parameter search, the search parameter calculation unit 1331C refers to a search candidate point having the largest value of the acquisition function in consideration of the average µ and the standard deviation σ of the search candidates as the next search target.

The parameter command unit 1332C commands the parameters calculated by the search parameter calculation unit 1331C to the mechanical device 2. For example, the parameter command unit 1332C transmits the parameters to be searched to the mechanical device 2 by a wireless or wired communication device (not illustrated in FIG. 11). The mechanical device 2 operates under the operation condition indicated by the parameters received from the parameter command unit 1332C.

Although the case where the operation result storing unit 112A, the evaluation value storing unit 122B, and the prediction result storing unit 1312C are different storage units has been described, these storage units may be provided in a storage area of one storage device.

In addition, the case where the operation result storing unit 112A, the evaluation value storing unit 122B, and the prediction result storing unit 1312C are storage units included in the parameter search device 1C has been described. However, the operation result storing unit, the evaluation value storing unit, and the prediction result storing unit may be storage units included in an external storage device provided separately from the parameter search device 1C.

Note that the external storage device is a storage device capable of reading stored contents from the parameter search device 1C by wireless or wired communication.

In the parameter search device 1C according to the fourth embodiment, the operation result collection unit 11A is replaced with the operation result collection unit 11B, and the evaluation value acquisition unit 12A is replaced with the evaluation value acquisition unit 12B in the configuration of the third embodiment.

In addition, the parameter search device 1C may replace only the operation result collection unit 11 with the operation result collection unit 11B in the parameter search device 1 according to the first embodiment, and output the external information from the sensor data storing unit 114 only to the evaluation value calculation unit 121.

In this case, the evaluation value calculation unit 121 calculates the evaluation value of the parameter using the operation result, and calculates the evaluation value of the parameter using the external information. Since the machine learning model can be learned using the peripheral information of the mechanical device 2 or the information on the operation task, the prediction accuracy of the machine learning model is improved. As a result, the parameter search device 1C can efficiently search for the parameter indicating the operation condition of the mechanical device 2.

As described above, in the parameter search device 1C according to the fourth embodiment, the operation result collection unit 11B further acquires the external information including at least one of the peripheral information of the mechanical device 2 or the information on the operation task. The evaluation value acquisition unit 12B calculates the evaluation value of the parameter using the external information. Since the machine learning model can be learned using the external information, the prediction accuracy of the relationship between the parameters and the evaluation values by the machine learning model increases. As a result, the parameter search device 1C can efficiently search for the parameter indicating the operation condition of the mechanical device 2.

In the parameter search device 1C according to the fourth embodiment, the operation result collection unit 11B further acquires external information including at least one of peripheral information of the mechanical device 2 or information on an operation task. The evaluation value acquisition unit 12B calculates the evaluation value of the constraint condition using the external information. Since the machine learning model can be learned using the external information, the prediction accuracy of the relationship among the parameters, the evaluation values, and the constraint conditions by the machine learning model increases. As a result, the parameter search device 1C can efficiently search for the parameter indicating the operation condition of the mechanical device 2.

### Fifth Embodiment.

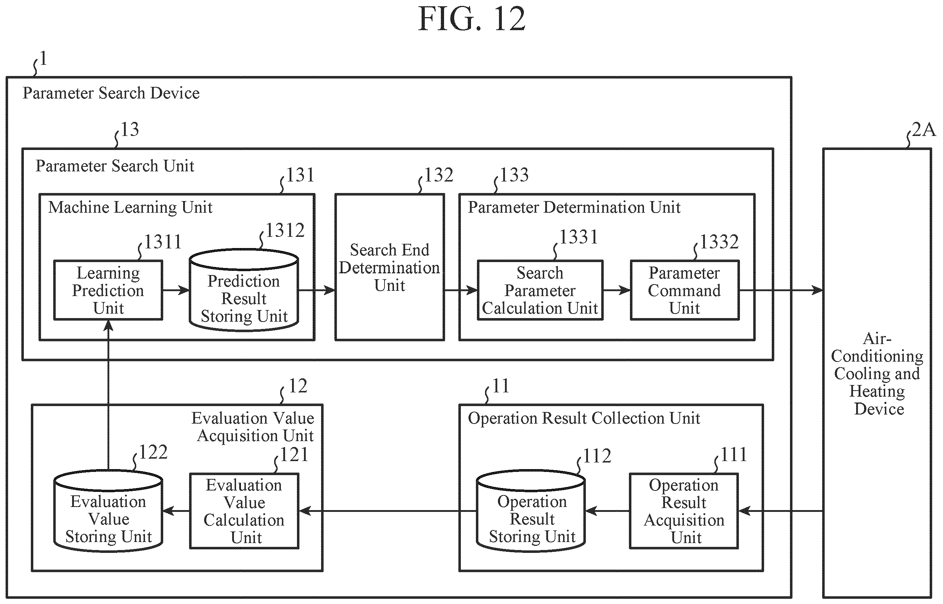

FIG. 12 is a block diagram illustrating a configuration of a parameter search device 1 according to a fifth embodiment. In the fifth embodiment, the mechanical device is an air-conditioning cooling and heating device 2A, and the parameter search device 1 according to the first embodiment searches for a parameter indicating an operation condition of the air-conditioning cooling and heating device 2A.

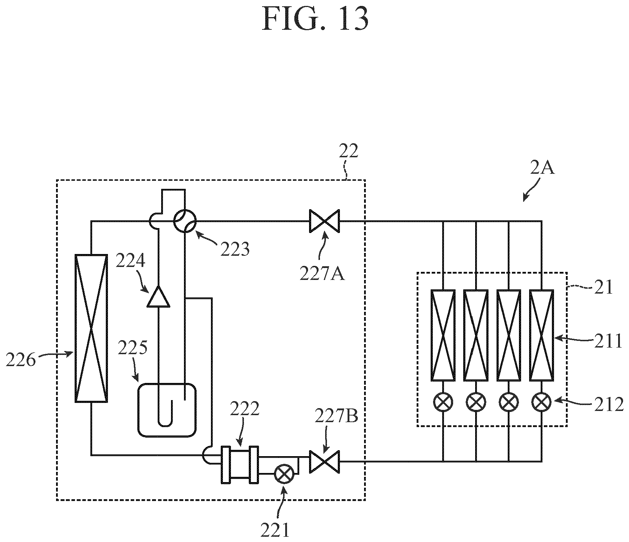

FIG. 13 is a conceptual diagram illustrating a refrigeration cycle of the air-conditioning cooling and heating device 2A. The air-conditioning cooling and heating device 2A is, for example, an air conditioner, ventilation equipment, sanitary equipment, a refrigerator, a water heater, or the like. As illustrated in FIG. 13, the air-conditioning cooling and heating device 2A includes an indoor unit 21 and an outdoor unit 22.

The indoor unit 21 includes an indoor heat exchanger 211 and an electronic expansion valve 212. The outdoor unit 22 includes an electronic expansion valve 221 for bypass, a refrigerant-refrigerant heat exchanger 222, a four-way valve 223, a compressor 224, an accumulator 225, an outdoor heat exchanger 226, an electromagnetic valve 227A, and an electromagnetic valve 227B. The air-conditioning cooling and heating device 2A includes a compressor 224 that conveys a refrigerant, a condenser that releases heat of the refrigerant to a surrounding fluid, an evaporator that absorbs heat from the surrounding fluid to the refrigerant, and an electronic expansion valve 212 and an electronic expansion valve 221 that apply a pressure difference to the refrigerant. The condenser is the outdoor heat exchanger 226 included in the outdoor unit 22, and the evaporator is the indoor heat exchanger 211 included in the indoor unit 21.

The operation result collection unit 11 collects an operation result including a parameter indicating an operation condition of the air-conditioning cooling and heating device 2A. For example, the parameter includes at least one of the opening degree of the electronic expansion valve 212, the opening degree of the electronic expansion valve 221, the opening degree of the four-way valve 223, the opening degrees of the electromagnetic valves 227A and 227B, the operation frequency of the compressor 224, the air volume of the fan, the rotation speed of the fan, the angle of the vane that determines the blowing direction, and the flow rate of the cooling and heating control target water included in the air-conditioning cooling and heating device 2A. As a result, the parameter search device 1 can efficiently search for the parameter indicating the operation condition of the air-conditioning cooling and heating device 2A.

The evaluation value calculation unit 121 calculates the evaluation value of the parameter indicating the operation condition of the air-conditioning cooling and heating device 2A using the operation result of the air-conditioning cooling and heating device 2A. For example, the evaluation value includes at least one of the cooling and heating capacity of the air-conditioning cooling and heating device 2A, the energy efficiency (COP) indicating the cooling and heating capacity with respect to the power consumption of the air-conditioning cooling and heating device 2A, the comfort index (PMV) of the air-conditioning cooling and heating device 2A, the temperature of the blow-out port of the air-conditioning cooling and heating device 2A, the outlet temperature of the cooling and heating control target water of the air-conditioning cooling and heating device 2A, and the concentration of carbon dioxide discharged by the cooling and heating control by the air-conditioning cooling and heating device 2A. As a result, the parameter search device 1 can efficiently search for the parameter indicating the operation condition of the air-conditioning cooling and heating device 2A.

For example, when it is desired to maximize COP in rated cooling, COP cannot be directly measured. Therefore, the evaluation value calculation unit 121 calculates the COP according to the following Formula (11). The parameter search unit 13 searches for a parameter having the maximum COP value.

In addition, the evaluation value calculation unit 121 can calculate the cooling and heating capacity generally on the basis of the heat balance (the difference in temperature or humidity of the suction or blow-out air and the air volume) in the indoor unit 21.

In addition, the learning prediction unit 1311 may calculate the physical properties of the refrigerant using the accumulator 225 or the air temperature inside and outside the room and predict the heat balance of the refrigerant on the basis of the calculation result.$COP = Rated capacity \left(kW\right) / Rated power consumption \left(kW\right)$ (11)

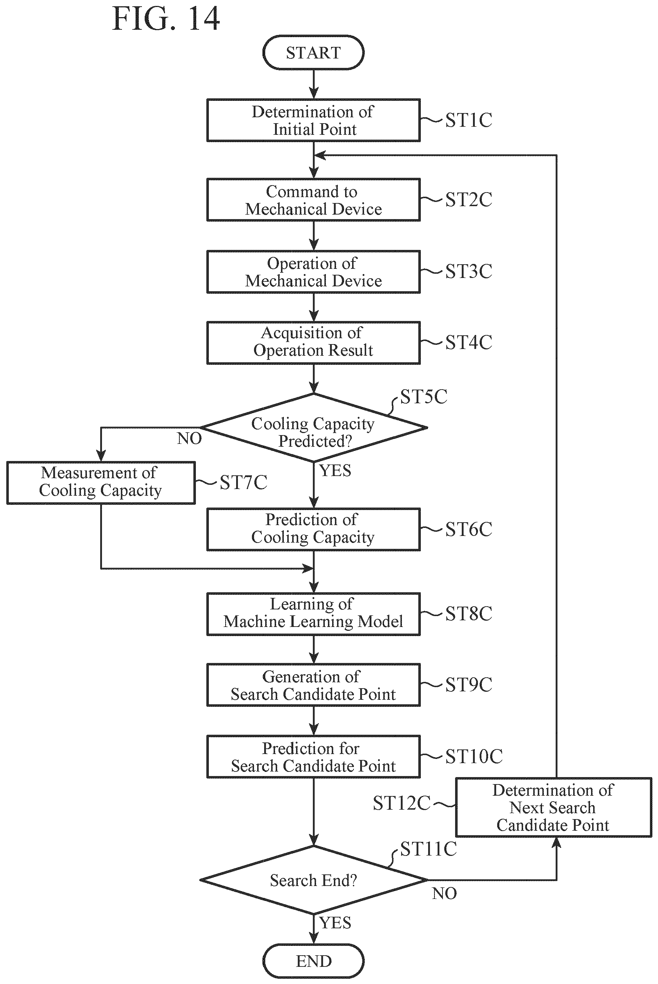

FIG. 14 is a flowchart illustrating a parameter search method according to the fifth embodiment, and illustrates operations of the parameter search device 1 and the air-conditioning cooling and heating device 2A.

First, the search parameter calculation unit 1331 determines an initial value of a parameter to be searched (step ST1C). For example, the search parameter calculation unit 1331 randomly determines an initial value of a parameter to be searched from parameters indicating various operation conditions of the air-conditioning cooling and heating device 2A. In addition, when a parameter having a high evaluation value has been previously known, the parameter may be set as an initial value.

Subsequently, the parameter command unit 1332 commands the initial value of the parameter to be searched calculated by the search parameter calculation unit 1331 to the air-conditioning cooling and heating device 2A (step ST2C). For example, the parameter command unit 1332 transmits an initial value of the parameter to be searched to the air-conditioning cooling and heating device 2A via an air-conditioning controller (not illustrated in FIG. 12) and sets the initial value.

Upon receiving the initial value of the parameter from the parameter command unit 1332, the air-conditioning cooling and heating device 2A operates under the operation condition indicated by the received parameter value (step ST3C).

When the air-conditioning cooling and heating device 2A starts operation, the operation result acquisition unit 111 sequentially acquires operation results from the air-conditioning cooling and heating device 2A via the air-conditioning controller (step ST4C). The operation result acquired by the operation result acquisition unit 111 is stored in the operation result storing unit 112.

Next, the operation result acquisition unit 111 checks whether or not to predict the cooling capacity of the air-conditioning cooling and heating device 2A (step ST5C). For example, the operation result acquisition unit 111 displays a confirmation screen on the air conditioning controller to inquire of the user.

When predicting the cooling capacity of the air-conditioning cooling and heating device 2A (step ST5C; YES), the operation result acquisition unit 111 predicts the cooling capacity of the air-conditioning cooling and heating device 2A (step ST6C).

For example, the operation result acquisition unit 111 predicts the heat balance of the refrigerant of the air-conditioning cooling and heating device 2A using the accumulator included in the air-conditioning cooling and heating device 2A or the air temperature inside and outside the room, and calculates the cooling capacity of the air-conditioning cooling and heating device 2A using the prediction result of the heat balance of the refrigerant. Subsequently, the evaluation value calculation unit 121 calculates an evaluation value of a parameter indicating the cooling capacity of the air-conditioning cooling and heating device 2A. The evaluation value calculated by the evaluation value calculation unit 121 is stored in the evaluation value storing unit 122 in association with the parameter.

When the cooling capacity of the air-conditioning cooling and heating device 2A is not predicted (step ST5C; NO), the operation result acquisition unit 111 calculates the parameter indicating the cooling capacity of the air-conditioning cooling and heating device 2A using the operation result stored in the operation result storing unit 112 (step ST7C).

For example, the operation result acquisition unit 111 calculates the cooling capacity of the air-conditioning cooling and heating device 2A using the measurement data of the difference in the air temperature or humidity and the air volume at the suction port or the blow-out port of the air-conditioning cooling and heating device 2A. The evaluation value calculation unit 121 calculates an evaluation value of a parameter indicating the cooling capacity of the air-conditioning cooling and heating device 2A. The evaluation value calculated by the evaluation value calculation unit 121 is stored in the evaluation value storing unit 122 in association with the parameter.

The learning prediction unit 1311 causes the machine learning model to learn the relationship between the parameters and the evaluation values by using the parameters and the evaluation values stored in the evaluation value storing unit 122 as training data (step ST8C). Subsequently, the learning prediction unit 1311 generates a search candidate for a parameter indicating the cooling capacity of the air-conditioning cooling and heating device 2A (step ST9C). For example, the learning prediction unit 1311 randomly generates a plurality of search candidates using the information indicating the parameters and the evaluation values stored in the evaluation value storing unit 122.

The learning prediction unit 1311 predicts the relationship between the parameters and the evaluation values in the search candidates using the machine learning model (step ST10C). For example, when Bayesian optimization is used to determine a parameter to be searched, the learning prediction unit 1311 calculates a next search target by calculating a function value called an acquisition function.

The search end determination unit 132 determines whether or not to end the parameter search on the basis of the prediction result stored in the prediction result storing unit 1312 (step ST11C).

For example, the search end determination unit 132 compares the average µ and the standard deviation σ of the search candidates, and the search best y_{best}, which are prediction results by the Gaussian process regression model that is a machine learning model, and refers to the number of search candidates exceeding the search best y_{best} as the search end index St.

When it is determined that the search end index St is less than the threshold (step ST11C; YES), the search end determination unit 132 determines to end the parameter search. As a result, a series of processing illustrated in FIG. 14 ends. On the other hand, when it is determined that the search end index St is equal to or more than the threshold (step ST11C; NO), the search end determination unit 132 determines to continue the parameter search, reads the current prediction result from the prediction result storing unit 1312, and outputs the read result to the parameter determination unit 133.

The search parameter calculation unit 1331 calculates a search candidate having the largest value of the acquisition function in consideration of the average µ and the standard deviation σ of the search candidates as a next search target (step ST12C). The parameter command unit 1332 commands the parameter to be searched calculated by the search parameter calculation unit 1331 to the air-conditioning cooling and heating device 2A. The air-conditioning cooling and heating device 2A operates under the operation condition indicated by the parameter received from the parameter command unit 1332. Thereafter, the processing returns to step ST2C, and the above-described processing is repeated.

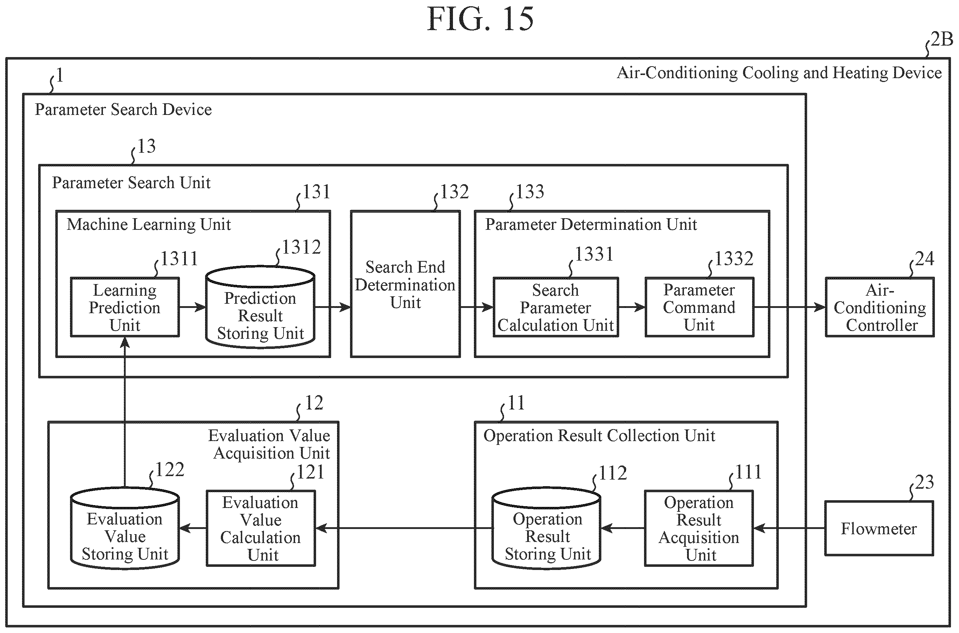

FIG. 15 is a block diagram illustrating a configuration of an air-conditioning cooling and heating device 2B including the parameter search device 1. As illustrated in FIG. 15, the air conditioning cooling and heating device 2B as a mechanical device may include the parameter search device 1. The air-conditioning cooling and heating device 2B includes a flowmeter 23 and an air-conditioning controller 24 in addition to the parameter search device 1.

The flowmeter 23 measures an air volume at a suction port or a blow-out port of the air-conditioning cooling and heating device 2B. When the parameter of the search result is input, the air-conditioning controller 24 sets the parameter in the air-conditioning cooling and heating device 2B. As a result, the air-conditioning cooling and heating device 2B is operated under the operation condition indicated by the parameter obtained by the parameter search device 1.

In the fifth embodiment, the parameter search device 1 searches for a parameter indicating the operation condition of the air-conditioning cooling and heating device 2A. Similarly, the parameter search device 1A, 1B, or 1C may search for a parameter indicating the operation condition of the air-conditioning cooling and heating device 2A.

When the parameter search device 1C searches for the parameter of the air-conditioning cooling and heating device 2A, the external information includes, for example, at least one of the temperature of the dry bulb, the temperature of the wet bulb, the length of the gas tube, the length of the liquid tube, the refrigerant amount, and the thermal load included in the air-conditioning cooling and heating device 2A. As a result, the parameter search device 1C can efficiently search for the parameter indicating the operation condition of the air-conditioning cooling and heating device 2A.

As described above, in the parameter search device 1 according to the fifth embodiment, the mechanical device is the air-conditioning cooling and heating device 2A. The parameters include at least one of the opening degree of the electronic expansion valve 212, the opening degree of the electronic expansion valve 221, the opening degree of the four-way valve 223, the opening degree of the electromagnetic valve 227A, the opening degree of the electromagnetic valve 227B, the operation frequency of the compressor 224, the air volume of the fan, the rotation speed of the fan, the angle of the vane that determines the blowing direction, and the flow rate of the cooling and heating control target water included in the air-conditioning cooling and heating device 2A. As a result, the parameter search device 1 can efficiently search for the parameter indicating the operation condition of the air-conditioning cooling and heating device 2A.

In the parameter search device 1 according to the fifth embodiment, the evaluation value includes at least one of the cooling and heating capacity of the air-conditioning cooling and heating device 2A, the COP indicating the cooling and heating capacity with respect to the power consumption of the air-conditioning cooling and heating device 2A, the PMV of the air-conditioning cooling and heating device 2A, the temperature of the blow-out port of the air-conditioning cooling and heating device 2A, the outlet temperature of the cooling/heating control target water of the air-conditioning cooling and heating device 2A, and the concentration of carbon dioxide discharged by the cooling/heating control of the air-conditioning cooling and heating device 2A. As a result, the parameter search device 1 can efficiently search for the parameter indicating the operation condition of the air-conditioning cooling and heating device 2A.

In the parameter search device 1C according to the fifth embodiment, the external information includes at least one of the temperature of the dry bulb, the temperature of the wet bulb, the length of the gas pipe, the length of the liquid pipe, the refrigerant amount, and the thermal load included in the air-conditioning cooling and heating device 2A. As a result, the parameter search device 1C can efficiently search for the parameter indicating the operation condition of the air-conditioning cooling and heating device 2A.

### Sixth Embodiment.

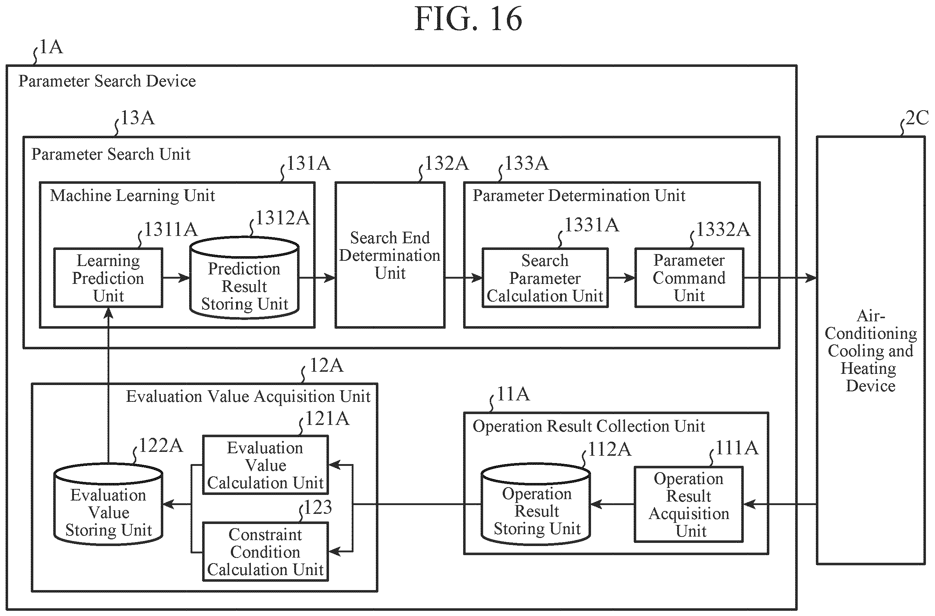

FIG. 16 is a block diagram illustrating a configuration of a parameter search device 1A according to the sixth embodiment.

In the sixth embodiment, the mechanical device is the air-conditioning cooling and heating device 2C, and the parameter search device 1A according to the second embodiment searches for a parameter indicating an operation condition of the air-conditioning cooling and heating device 2C.

The constraint condition calculation unit 123 calculates a constraint condition to be satisfied in the operation of the air-conditioning cooling and heating device 2C using the operation result acquired by the operation result acquisition unit 111A.

For example, when searching for a parameter indicating the operation condition of the air-conditioning cooling and heating device 2C conforming to a standard such as JRA (Japan Refrigeration and Air Conditioning Industry Association standard), it is necessary to consider the stability of the refrigeration cycle of the air-conditioning cooling and heating device 2C.

The constraint conditions include, for example, at least one of the cooling and heating capacity of the air-conditioning cooling and heating device 2C, the power consumption of the air-conditioning cooling and heating device 2C, the COP indicating the cooling and heating capacity with respect to the power consumption of the air-conditioning cooling and heating device 2C, the suction heating degree of the compressor included in the air-conditioning cooling and heating device 2C, the supercooling degree of the inlet of the electronic expansion valve included in the air-conditioning cooling and heating device 2C, the temperature and pressure of the refrigerant controlled by the compressor, the flow rate, temperature, and pressure of the cooling and heating control target water of the air-conditioning cooling and heating device 2C, and the current flowing through the electronic circuit of the electronic board included in the air-conditioning cooling and heating device 2C. By considering these constraint conditions, the parameter search device 1A can efficiently search for the parameter indicating the operation condition of the air-conditioning cooling and heating device 2C.

For example, when the constraint condition is that the cooling capacity is equal to or more than 40 kW, the constraint condition calculation unit 123 calculates the value of the constraint condition c using the following Formula (12). 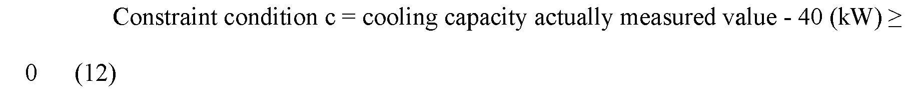 Constraint condition c = cooling capacity actually measured value - 40 (kW) ≥ 0 (12)

In the sixth embodiment, the parameter search device 1A searches for a parameter indicating the operation condition of the air-conditioning cooling and heating device 2C. Similarly, the parameter search device 1B or 1C may search for a parameter indicating the operation condition of the air-conditioning cooling and heating device 2A.

When the parameter search device 1B or 1C searches for a parameter indicating the operation condition of the air-conditioning cooling and heating device 2C, the preliminary data acquired by the preliminary data collection device 3 includes at least one of a plurality of parameters as search candidates and an evaluation value of the parameter.

Here, the preliminary data includes, for example, an operation result obtained by simulating the operation of the air-conditioning cooling and heating device 2C with a simulator or log data obtained when the air-conditioning cooling and heating device 2C has been experimentally operated in the past.

When the state quantity and the constraint condition of the air-conditioning cooling and heating device 2C can be acquired, the preliminary learning unit 1313 generates a preliminary learning model in which the relationship between the parameters and the constraint conditions is learned using the parameter indicating the operation condition of the air-conditioning cooling and heating device 2C, the state quantity of the air-conditioning cooling and heating device 2C, and the data indicating the constraint condition. The preliminary learning unit 1313 predicts a relationship between the parameters and the constraint conditions by using the preliminary learning model, and generates a preliminary distribution indicating a distribution of the parameters and the constraint conditions. The learning prediction unit 1311B or 1311C causes the machine learning model to learn the relationship between the parameters and the constraint conditions using the preliminary distribution. As a result, since it is possible to cause the machine learning model, which has preliminarily learned with a small amount of training data, to further learn using the preliminary data, the accuracy of prediction by the machine learning model can be improved. Since the prediction accuracy of the machine learning model is improved, it is possible to efficiently search for the parameter indicating the operation condition of the air-conditioning cooling and heating device 2C.

The parameter search device according to the sixth embodiment may be a parameter search device 1C that searches for a parameter indicating the operation condition of the air-conditioning cooling and heating device 2C. In this case, the parameter search device 1C uses external information detected by the external sensor provided in the air-conditioning cooling and heating device 2C to predict the relationship among the parameters indicating the operation condition of the air-conditioning cooling and heating device 2C, the evaluation values, and the external information, or the relationship among the parameters, the constraint conditions, and the external information.

Examples of the external sensor include a temperature sensor or an infrared camera disposed in the same room as the indoor unit 21 of the air-conditioning cooling and heating device 2C. The external information is, for example, information including at least one of a temperature of a dry bulb, a temperature of a wet bulb, a length of a gas pipe, a length of a piping (liquid pipe), a refrigerant amount, and a thermal load, which are included in the air-conditioning cooling and heating device 2C.

The information indicating the outdoor air temperature may be air temperature information around the air-conditioning cooling and heating device 2C acquired from the network by the operation result collection unit 11A. The external information may be information indicating the configuration of the air-conditioning cooling and heating device 2C, such as the number or capacity of the indoor units 21.

The thermal load is information on an indoor heat source defined by an outdoor air temperature, a person presents in the room, another electronic device that can be a heat source, or the like. For example, in a case where the electronic device is a smartphone, the operation result collection unit 11A calculates the thermal load in the room where the air-conditioning cooling and heating device 2C is installed by using the temperature information detected by the thermometer in the room, the temperature information of the smartphone described above, the infrared camera image, and the weather information around the room where the air-conditioning cooling and heating device 2C is installed.

Further, the operation result collection unit 11A may calculate the thermal load in consideration of the number of persons present in the room. The number of persons can be calculated using position information of a smartphone carried by each person, an infrared camera image, an entry/exit record of a room in which the air-conditioning cooling and heating device 2C is installed, or schedule information of each person. Further, the operation result collection unit 11A may calculate the thermal load using a physical model related to the thermal load in the room in which the air-conditioning cooling and heating device 2C is installed or a machine learning model learned to predict the thermal load.

The operation result collection unit 11A may collect the information on the temperature of the dry bulb, the temperature of the wet bulb, the length of the gas pipe, the length of the piping, or the height difference of the piping included in the air-conditioning cooling and heating device 2C from the catalog information of the air-conditioning cooling and heating device 2C provided on the network.

Note that the operation result collection unit 11A may collect values of individual data as the external information described above, or may collect index values calculated on the basis of these pieces of data.

By using the external information indicating the installation environment of the air-conditioning cooling and heating device 2C, the parameter search device 1C can search for and set an appropriate parameter for each destination of the air-conditioning cooling and heating device 2C. As a result, the air-conditioning cooling and heating device 2C can be operated such that COP, cooling and heating capacity, or power consumption is maximized or minimized for each installation environment.

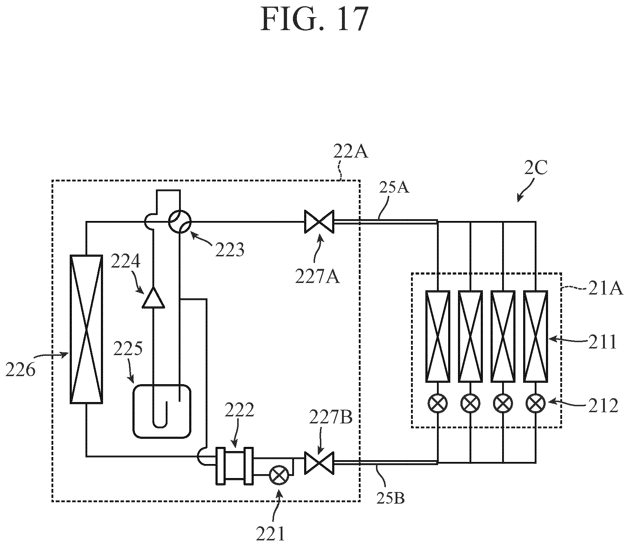

FIG. 17 is a conceptual diagram illustrating a refrigeration cycle of the air-conditioning cooling and heating device 2C. The air-conditioning cooling and heating device 2C is, for example, an air conditioner, ventilation equipment, sanitary equipment, a refrigerator, a water heater, or the like. As illustrated in FIG. 17, the air-conditioning cooling and heating device 2A includes an indoor unit 21 and an outdoor unit 22. The piping 25A and the piping 25B are piping connecting the indoor unit 21 and the outdoor unit 22. The lengths of the piping 25A and the piping 25B connecting the indoor unit 21 and the outdoor unit 22 may be different depending on the installation destination of the air-conditioning cooling and heating device 2C. The lengths of the piping 25A and the piping 25B are factors that greatly affect the operation of the air-conditioning cooling and heating device 2C. For this reason, a parameter, an evaluation value, or a constraint condition indicating an optimum operation condition in the operation of the air-conditioning cooling and heating device 2C is also different depending on the lengths of the piping 25A and the piping 25B.

Therefore, the parameter search device 1C may use the lengths of the piping 25A and the piping 25B as the external information to predict the relationship among the parameters indicating the operating condition of the air-conditioning cooling and heating device 2C, the evaluation values, and the external information, or the relationship among the parameters, the constraint conditions, and the external information.

As described above, the parameter search device 1C searches for the parameter indicating the operation condition of the air-conditioning cooling and heating device 2C in consideration of the standard such as the JRA or the stability of the refrigeration cycle, and it is therefore possible to provide the air-conditioning cooling and heating device 2C with high quality.

As described above, in the parameter search device 1A according to the sixth embodiment, the mechanical device is the air-conditioning cooling and heating device 2C. As the constraint conditions, at least one of the cooling and heating capacity of the air-conditioning cooling and heating device 2C, the power consumption of the air-conditioning cooling and heating device 2C, the energy efficiency indicating the cooling and heating capacity with respect to the power consumption of the air-conditioning cooling and heating device 2C, the suction heating degree of the compressor 224 included in the air-conditioning cooling and heating device 2C, the supercooling degrees of the inlets of the electronic expansion valves 212 and 221 included in the air-conditioning cooling and heating device 2C, the temperature and the pressure of the refrigerant controlled by the compressor 224, the flow rate, the temperature and the pressure of the cooling and heating control target water of the air-conditioning cooling and heating device 2C, and the current flowing through the electronic circuit of the electronic board included in the air-conditioning cooling and heating device 2C is within a certain range.

As a result, the parameter search device 1A can efficiently search for the parameter indicating the operation condition of the air-conditioning cooling and heating device 2A.

In the parameter search device 1C according to the sixth embodiment, the external information includes at least one of the temperature of the dry bulb, the temperature of the wet bulb, the length of the gas pipe, the length of the liquid pipe, the refrigerant amount, and the thermal load included in the air-conditioning cooling and heating device 2C. As a result, the parameter search device 1C can efficiently search for the parameter indicating the operation condition of the air-conditioning cooling and heating device 2A.

Note that combinations of the respective embodiments, modifications of any components of the respective embodiments, or omissions of any components in the respective embodiments are possible.

### INDUSTRIAL APPLICABILITY

The parameter search device according to the present disclosure can be used to search for an operation condition of an air-conditioning cooling and heating device, for example.

### REFERENCE SIGNS LIST

1, 1A, 1B, and 1C: Parameter search device, 2: Mechanical device, 2A, 2B, and 2C: Air-conditioning cooling and heating device, 3: Preliminary data collection device, 4: external sensor, 11, 11A, and 11B: Operation result collection unit, 12, 12A, and 12B: Evaluation value acquisition unit, 13, 13A, 13B, and 13C: Parameter search unit, 21: Indoor unit, 22: outdoor unit, 23: Flowmeter, 24: Air-Conditioning controller, 25A and 25B: Piping, 31: preliminary data acquisition unit, 32: Preliminary data storing unit, 100: Input interface, 101: Output interface, 102: Processing circuitry, 103: Processor, 104: Memory, 111, and 111A: Operation result acquisition unit, 112 and 112A: Operation result storing unit, 113: Sensor data acquisition unit, 114: Sensor data storing unit, 121, 121A, and 121B: Evaluation value calculation unit, 122, 122A, and 122B: Evaluation value storing unit, 123 and 123A: Constraint condition calculation unit, 131, 131A, 131B, and 131C: Machine learning unit, 132, 132A, 132B, and 132C: Search end determination unit, 133, 133A, 133B, and 133C: Parameter determination unit, 211: Indoor heat exchanger, 212 and 221: Electronic expansion valve, 222: Refrigerant heat exchanger, 223: Four-way valve, 224: Compressor, 225: Accumulator, 226: Outdoor heat exchanger, 227A and 227B: Electromagnetic valve, 1311, 1311A, 1311B, and 1311C: Learning prediction unit, 1312, 1312A, 1312B, and 1312C: Prediction result storing unit, 1313: Preliminary learning unit, 1331, 1331A, 1331B, and 1331C: Search parameter calculation unit, 1332, 1332A, 1332B, and 1332C: Parameter command unit

## Claims

1. A parameter search device (1, 1A, 1B, 1C) comprising:
an operation result collection unit (11, 11A, 11B) to collect an operation result including parameters indicating an operation condition of a mechanical device (2, 2A, 2B, 2C);
an evaluation value acquisition unit (12, 12A, 12B) to acquire evaluation values of the parameters obtained by using the operation result; and
a parameter search unit (13, 13A, 13B, 13C) to search for the target parameter from the parameters indicating the operation condition of the mechanical device (2, 2A, 2B, 2C), wherein
the parameter search unit (13, 13A, 13B, 13C):
predicts, when a plurality of search candidates for the parameters and the evaluation values are input, a relationship between the parameters and the evaluation values in the search candidates by using a machine learning model that outputs a relationship between the parameters and the evaluation values in the search candidates,
compares a prediction result of the machine learning model with a search best having a maximum evaluation value among the parameters obtained by searching, and defines, as a search end index, a number of search candidates whose predicted evaluation values are greater than an evaluation value of the search best, and
determines whether or not to continue searching for the parameter on a basis of a comparison result between the search end index and a threshold.

2. The parameter search device (1, 1A, 1B, 1C) according to claim 1, wherein
the parameter search unit (13, 13A, 13B, 13C) learns the machine learning model.

3. The parameter search device (1A, 1B, 1C) according to claim 1 or 2, wherein
the operation result collection unit (11A, 11B) collects the operation result further including a constraint condition to be satisfied in the operation of the mechanical device (2, 2A, 2B, 2C),
when a plurality of the search candidates for the parameter, the constraint condition, and the evaluation value are input, the parameter search unit (13A, 13B, 13C) predicts a relationship among the parameters, the evaluation values, and the constraint condition in the search candidates by using the machine learning model that outputs a prediction value indicating a relationship among the parameters, the evaluation values, and the constraint condition in the search candidates.

4. The parameter search device (1B, 1C) according to claim 2, wherein
the parameter search unit (13B, 13C) acquires a preliminary learning model that has preliminarily learned a relationship between the parameters and the evaluation values, and learns the machine learning model using the preliminary learning model.

5. The parameter search device (1B, 1C) according to claim 3, wherein
the parameter search unit (13B, 13C) acquires a preliminary learning model that has preliminarily learned a relationship among the parameters, the constraint condition, and the evaluation values, and learns the machine learning model using the preliminary learning model.

6. The parameter search device (1C) according to any one of claims 1 to 5, wherein
the operation result collection unit (11B) further acquires external information including at least one of peripheral information of the mechanical device (2, 2A, 2B, 2C) or information on an operation task, and
the evaluation value acquisition unit (12B) calculates the evaluation value of the parameter using the external information.

7. The parameter search device (1C) according to claim 5, wherein
the operation result collection unit (11B) further acquires external information including at least one of peripheral information of the mechanical device (2, 2A, 2B, 2C) or information on an operation task, and
the evaluation value acquisition unit (12B) calculates the evaluation value of the constraint condition using the external information.

8. The parameter search device (1, 1A, 1B, 1C) according to any one of claims 1 to 7, wherein
the mechanical device (2, 2A, 2B, 2C) is an air-conditioning cooling and heating device (2A, 2B, 2C), and
the parameter includes at least one of an opening degree of an electronic expansion valve, an opening degree of an electromagnetic valve, an operation frequency of a compressor, an air volume of a fan, a rotation speed of the fan, an angle of a vane that determines a blowing direction, and a flow rate of cooling and heating control target water, which are included in the air-conditioning cooling and heating device (2A, 2B, 2C).

9. The parameter search device (1, 1A, 1B, 1C) according to claim 8, wherein
the evaluation value includes at least one of a cooling and heating capacity of the air-conditioning cooling and heating device (2A, 2B, 2C), an energy efficiency indicating the cooling and heating capacity with respect to power consumption of the air-conditioning cooling and heating device (2A, 2B, 2C), a comfort index of the air-conditioning cooling and heating device (2A, 2B, 2C), a temperature of a blow-out port of the air-conditioning cooling and heating device (2A, 2B, 2C), an outlet temperature of cooling and heating control target water of the air-conditioning cooling and heating device (2A, 2B, 2C), and a concentration of carbon dioxide discharged by cooling and heating control by the air-conditioning cooling and heating device (2A, 2B, 2C).

10. The parameter search device (1, 1A, 1B, 1C) according to claim 3, wherein
the mechanical device is an air-conditioning cooling and heating device (2A, 2B, 2C), and
the constraint condition is that a value of at least one of a cooling and heating capacity of the air-conditioning cooling and heating device (2A, 2B, 2C), power consumption of the air-conditioning cooling and heating device (2A, 2B, 2C), an energy efficiency indicating the cooling and heating capacity with respect to the power consumption of the air-conditioning cooling and heating device (2A, 2B, 2C), a suction heating degree of a compressor included in the air-conditioning cooling and heating device (2A, 2B, 2C), a supercooling degree of an inlet of an electronic expansion valve included in the air-conditioning cooling and heating device (2A, 2B, 2C), a temperature and a pressure of a refrigerant controlled by the compressor, a flow rate, a temperature and a pressure of cooling and heating control target water of the air-conditioning cooling and heating device (2A, 2B, 2C), and a current flowing through an electronic circuit of an electronic board included in the air-conditioning cooling and heating device (2A, 2B, 2C) is within a certain range.

11. The parameter search device (1, 1A, 1B, 1C) according to claim 6 or 7, wherein
the mechanical device is an air-conditioning cooling and heating device (2A, 2B, 2C), and
the external information includes at least one of a temperature of a dry bulb, a temperature of a wet bulb, a length of a gas pipe, a length of a liquid pipe, an amount of a refrigerant, and a thermal load, which are included in the air-conditioning cooling and heating device (2A, 2B, 2C).

12. A parameter search method by a parameter search device (1, 1A, 1B, 1C), the method comprising the steps of:
collecting, by an operation result collection unit (11, 11A, 11B), an operation result including parameters indicating an operation condition of a mechanical device (2, 2A, 2B, 2C);
acquiring, by an evaluation value acquisition unit (12, 12A, 12B), evaluation values of the parameters obtained by using the operation result; and
searching, by a parameter search unit (13, 13A, 13B, 13C), for the target parameter from the parameters indicating the operation condition of the mechanical device (2, 2A, 2B, 2C), wherein
the parameter search unit (13, 13A, 13B, 13C):
predicts, when a plurality of search candidates for the parameters and the evaluation values are input, a relationship between the parameters and the evaluation values in the search candidates by using a machine learning model that outputs a relationship between the parameters and the evaluation values in the search candidates,
compares a prediction result of the machine learning model with a search best having a maximum evaluation value among the parameters obtained by searching, and defines, as a search end index, a number of search candidates whose predicted evaluation values are greater than an evaluation value of the search best, and
determines whether or not to continue searching for the parameter on a basis of a comparison result between the search end index and a threshold.

## Patentansprüche

1. Parametersuchvorrichtung (1, 1A, 1B, 1C), umfassend:
eine Betriebsergebnis-Sammeleinheit (11, 11A, 11B) zum Erheben eines Betriebsergebnisses, das Parameter enthält, die einen Betriebszustand einer mechanischen Vorrichtung (2, 2A, 2B, 2C) angeben;
eine Evaluierungswert-Erfassungseinheit (12, 12A, 12B) zum Erfassen von Evaluierungswerten der Parameter, die unter Verwendung des Betriebsergebnisses bezogen wurden; und
eine Parametersucheinheit (13, 13A, 13B, 13C) zum Suchen des Zielparameters aus den Parametern, die die Betriebsbedingung der mechanischen Vorrichtung (2, 2A, 2B, 2C) angeben, wobei
die Parametersucheinheit (13, 13A, 13B, 13C):
wenn mehrere Suchkandidaten für die Parameter und die Evaluierungswerte eingegeben werden, eine Beziehung zwischen den Parametern und den Evaluierungswerten in den Suchkandidaten unter Verwendung eines Modells für maschinelles Lernen, das eine Beziehung zwischen den Parametern und den Evaluierungswerten in den Suchkandidaten ausgibt, vorhersagt,
ein Vorhersageergebnis des Modells des maschinellen Lernens mit dem besten Suchergebnis, das unter den durch die Suche erhaltenen Parametern den höchsten Evaluierungswert aufweist, vergleicht, und als Suchendindex die Anzahl der Suchkandidaten, deren vorhergesagte Evaluierungswerte größer sind als der Evaluierungswert des besten Suchergebnisses definiert, und
anhand eines Vergleichsergebnisses zwischen dem Suchendindex und einem Schwellenwert bestimmt, ob die Suche nach dem Parameter fortgesetzt werden soll oder nicht.

2. Parametersuchvorrichtung (1, 1A, 1B, 1C) nach Anspruch 1, wobei
die Parametersucheinheit (13, 13A, 13B, 13C) das Modell des maschinellen Lernens lernt.

3. Parametersuchvorrichtung (1A, 1B, 1C) nach Anspruch 1 oder 2, wobei
die Betriebsergebnis-Sammeleinheit (11A, 11B) das Betriebsergebnis erhebt, das zudem eine bei dem Betrieb der mechanischen Vorrichtung (2, 2A, 2B, 2C) zu erfüllende Einschränkungsbedingung umfasst,
wenn eine Vielzahl von den Suchkandidaten für den Parameter, die Einschränkungsbedingung und den Bewertungswert eingegeben werden, prognostiziert die Parametersucheinheit (13A, 13B, 13C) eine Beziehung zwischen den Parametern, den Evaluierungswerten und der Einschränkungsbedingung in den Suchkandidaten, indem sie das Modell des maschinellen Lernens verwendet, das einen Vorhersagewert ausgibt, der eine Beziehung zwischen den Parametern, den Evaluierungswerten und der Einschränkungsbedingung in den Suchkandidaten angibt.

4. Parametersuchvorrichtung (1B, 1C) nach Anspruch 2, wobei
die Parametersucheinheit (13B, 13C) ein vorläufiges Lernmodell bezieht, das bereits eine Beziehung zwischen den Parametern und den Evaluierungswerten erlernt hat, und das Model des maschinellen Lernens unter Verwendung des vorläufigen Lernmodells trainiert.

5. Parametersuchvorrichtung (1B, 1C) nach Anspruch 3, wobei
die Parametersucheinheit (13B, 13C) ein vorläufiges Lernmodell bezieht, das zuvor eine Beziehung zwischen den Parametern, der Einschränkungsbedingung und den Evaluierungswerten gelernt hat, und lernt das Modell des maschinellen Lernens unter Verwendung des vorläufigen Lernmodells.

6. Parametersuchvorrichtung (1C) nach einem der Ansprüche 1 bis 5, wobei
die Betriebsergebnis-Sammeleinheit (11B) ferner externe Informationen bezieht, darunter zumindest entweder Peripherieinformationen der mechanischen Vorrichtung (2, 2A, 2B, 2C) oder Informationen zu einer Betriebsaufgabe, und
die Evaluierungswert-Erfassungseinheit (12B) den Evaluierungswert des Parameters unter Verwendung der externen Informationen berechnet.

7. Parametersuchvorrichtung (1C) nach Anspruch 5, wobei
die Betriebsergebnis-Sammeleinheit (11B) ferner externe Informationen bezieht, darunter zumindest entweder Peripherieinformationen der mechanischen Vorrichtung (2, 2A, 2B, 2C) oder Informationen zu einer Betriebsaufgabe, und
die Evaluierungswert-Erfassungseinheit (12B) den Evaluierungswert der Einschränkungsbedingung unter Verwendung der externen Informationen berechnet.

8. Parametersuchvorrichtung (1, 1A, 1B, 1C) nach einem der Ansprüche 1 bis 7, wobei
die mechanische Vorrichtung (2, 2A, 2B, 2C) eine Klimaanlagen-Kühl- und Heizvorrichtung (2A, 2B, 2C) ist, und
der Parameter mindestens einen der folgenden Werte umfasst: den Öffnungsgrad eines elektronischen Expansionsventils, den Öffnungsgrad eines Magnetventils, die Betriebsfrequenz eines Verdichters, das Luftvolumen eines Lüfters, die Drehzahl des Lüfters, den Winkel eines Flügels, der die Gebläserichtung bestimmt, sowie die Strömungsrate des Wassers für die Kühl- und Heizsteuerung vorgesehen ist, wobei diese Komponenten in der Klimaanlagen-Kühl- und Heizvorrichtung (2A, 2B, 2C) enthalten sind.

9. Parametersuchvorrichtung (1, 1A, 1B, 1C) nach Anspruch 8, wobei
der Evaluierungswert mindestens eine der Folgenden umfasst: die Kühl- und Heizleistung der Klimaanlagen-Kühl- und Heizvorrichtung (2A, 2B, 2C) eine Energieeffizienz, die die Kühl- und Heizleistung im Verhältnis zum Stromverbrauch der Klimaanlagen-Kühl- und Heizvorrichtung (2A, 2B, 2C) angibt, einen Komfortindex der Klimaanlagen-Kühl- und Heizvorrichtung (2A, 2B, 2C), eine Temperatur an einer Ausblasöffnung der Klimaanlagen-Kühl- und Heizvorrichtung (2A, 2B, 2C), eine Austrittstemperatur des Zielwassers für die Kühl- und Heizungssteuerung der Klimaanlagen-Kühl- und Heizvorrichtung (2A, 2B, 2C) sowie eine Konzentration des Kohlendioxids, das bei der Kühl- und Heizungssteuerung durch die Klimaanlagen-Kühl- und Heizvorrichtung (2A, 2B, 2C) freigesetzt wird.

10. Parametersuchvorrichtung (1, 1A, 1B, 1C) nach Anspruch 3, wobei
die mechanische Vorrichtung eine Klimaanlagen-Kühl- und Heizvorrichtung (2A, 2B, 2C) ist, und
die Einschränkungsbedingung lautet, dass der Wert mindestens einer der Folgenden innerhalb eines bestimmten Bereichs liegt: Kühl- und Heizleistung der Klimaanlagen-Kühl- und Heizvorrichtung (2A, 2B, 2C), der Stromverbrauch der Klimaanlagen-Kühl- und Heizvorrichtung (2A, 2B, 2C), eine Energieeffizienz, die die Kühl- und Heizleistung im Verhältnis zum Stromverbrauch der Klimaanlagen-Kühl- und Heizvorrichtung (2A, 2B, 2C) angibt, oder der Saugheizungsgrad eines in der Klimaanlagen-Kühl- und Heizvorrichtung (2A, 2B, 2C) enthaltenen Verdichters, ein Unterkühlungsgrad am Einlass eines elektronischen Expansionsventils, das in der Klimaanlagen-Kühl- und Heizvorrichtung (2A, 2B, 2C) enthalten ist, eine Temperatur und ein Druck eines vom Verdichter gesteuerten Kältemittels, eine Strömungsrate, eine Temperatur und ein Druck des Zielwassers für die Klimaanlagen-Kühl- und Heizvorrichtung (2A, 2B, 2C), und ein Strom, der durch eine elektronische Schaltung einer in der Klimaanlagen-Kühl- und Heizvorrichtung (2A, 2B, 2C) enthaltenen elektronischen Platine fließt, innerhalb eines bestimmten Bereichs liegt.

11. Parametersuchvorrichtung (1, 1A, 1B, 1C) nach Anspruch 6 oder 7, wobei
die mechanische Vorrichtung eine Klimaanlagen-Kühl- und Heizvorrichtung (2A, 2B, 2C) ist, und
mindestens eine der Folgenden zu den externen Informationen gehören: eine Trockenthermometertemperatur, eine Feuchtkugeltemperatur, Länge einer Gasleitung, Länge einer Flüssigkeitsleitung, Kältemittelmenge und Wärmebelastung, die in der Klimaanlagen-Kühl- und Heizvorrichtung (2A, 2B, 2C) enthalten sind.

12. Parametersuchverfahren durch eine Parametersuchvorrichtung (1, 1A, 1B, 1C), wobei das Verfahren die folgenden Schritte umfasst:
Erheben eines Betriebsergebnisses, das Parameter enthält, die einen Betriebsbedingung einer mechanischen Vorrichtung (2, 2A, 2B, 2C) angeben, durch eine Betriebsergebnis-Sammeleinheit (11, 11A, 11B);
Beschaffen von Evaluierungswerten der Parameter, die unter Verwendung des Betriebsergebnisses erhalten wurden, durch eine Evaluierungswert-Erfassungseinheit (12, 12A, 12B); und
Suchen des Zielparameters durch eine Parametersucheinheit (13, 13A, 13B, 13C) aus den Parametern, die die Betriebsbedingung der mechanischen Vorrichtung (2, 2A, 2B, 2C) angeben, wobei
die Parametersucheinheit (13, 13A, 13B, 13C):
wenn mehrere Suchkandidaten für die Parameter und die Evaluierungswerte eingegeben werden, eine Beziehung zwischen den Parametern und den Evaluierungswerten in den Suchkandidaten unter Verwendung eines Modells für maschinelles Lernen, das eine Beziehung zwischen den Parametern und den Evaluierungswerten in den Suchkandidaten ausgibt, vorhersagt,
ein Vorhersageergebnis des Modells des maschinellen Lernens mit dem besten Suchergebnis, das unter den durch die Suche erhaltenen Parametern den höchsten Evaluierungswert aufweist, vergleicht, und als Suchendindex die Anzahl der Suchkandidaten, deren vorhergesagte Evaluierungswerte größer sind als der Evaluierungswert des besten Suchergebnisses definiert, und
anhand eines Vergleichsergebnisses zwischen dem Suchendindex und einem Schwellenwert bestimmt, ob die Suche nach dem Parameter fortgesetzt werden soll oder nicht.

## Revendications

1. Un dispositif de recherche de paramètres (1, 1A, 1B, 1C) comprenant :
une unité de collecte de résultats de fonctionnement (11, 11A, 11B) destinée à collecter un résultat de fonctionnement comprenant des paramètres indiquant une condition de fonctionnement d'un dispositif mécanique (2, 2A, 2B, 2C) ;
une unité d'acquisition de valeurs d'évaluation (12, 12A, 12B) destinée à acquérir des valeurs d'évaluation des paramètres obtenues en utilisant le résultat de fonctionnement ; et
une unité de recherche de paramètres (13, 13A, 13B, 13C) destinée à rechercher le paramètre cible parmi les paramètres indiquant la condition de fonctionnement du dispositif mécanique (2, 2A, 2B, 2C), dans lequel
l'unité de recherche de paramètres (13, 13A, 13B, 13C) :
prévoit, lorsqu'une pluralité de candidats de recherche pour les paramètres et les valeurs d'évaluation sont entrés, une relation entre les paramètres et les valeurs d'évaluation dans les candidats de recherche au moyen d'un modèle d'apprentissage automatique qui délivre une relation entre les paramètres et les valeurs d'évaluation dans les candidats de recherche,
compare un résultat de prédiction du modèle d'apprentissage automatique avec un meilleur résultat de recherche présentant une valeur d'évaluation maximale parmi les paramètres obtenus par recherche, et définit, en tant qu'indice de fin de recherche, un nombre de candidats de recherche dont les valeurs d'évaluation prédites sont supérieures à une valeur d'évaluation du meilleur résultat de recherche, et
détermine s'il convient ou non de poursuivre la recherche du paramètre sur la base d'un résultat de comparaison entre l'indice de fin de recherche et un seuil.

2. Le dispositif de recherche de paramètres (1, 1A, 1B, 1C) selon la revendication 1, dans lequel
l'unité de recherche de paramètres (13, 13A, 13B, 13C) apprend le modèle d'apprentissage automatique.

3. Le dispositif de recherche de paramètres (1A, 1B, 1C) selon la revendication 1 ou 2, dans lequel
l'unité de collecte de résultats de fonctionnement (11A, 11B) collecte le résultat de fonctionnement comprenant en outre une condition de contrainte à satisfaire lors du fonctionnement du dispositif mécanique (2, 2A, 2B, 2C),
lorsqu'une pluralité des candidats de recherche pour le paramètre, la condition de contrainte et la valeur d'évaluation sont entrés, l'unité de recherche de paramètres (13A, 13B, 13C) prédit une relation entre les paramètres, les valeurs d'évaluation et la condition de contrainte dans les candidats de recherche en utilisant le modèle d'apprentissage automatique qui délivre une valeur de prédiction indiquant une relation entre les paramètres, les valeurs d'évaluation et la condition de contrainte dans les candidats de recherche.

4. Le dispositif de recherche de paramètres (1B, 1C) selon la revendication 2, dans lequel
l'unité de recherche de paramètres (13B, 13C) acquiert un modèle d'apprentissage préliminaire qui a préalablement appris une relation entre les paramètres et les valeurs d'évaluation, et apprend le modèle d'apprentissage automatique en utilisant le modèle d'apprentissage préliminaire.

5. Le dispositif de recherche de paramètres (1B, 1C) selon la revendication 3, dans lequel
l'unité de recherche de paramètres (13B, 13C) acquiert un modèle d'apprentissage préliminaire qui a préalablement appris une relation entre les paramètres, la condition de contrainte et les valeurs d'évaluation, et apprend le modèle d'apprentissage automatique en utilisant le modèle d'apprentissage préliminaire.

6. Le dispositif de recherche de paramètres (1C) selon l'une quelconque des revendications 1 à 5, dans lequel
l'unité de collecte de résultats de fonctionnement (11B) acquiert en outre des informations externes comprenant au moins une des informations périphériques du dispositif mécanique (2, 2A, 2B, 2C) ou des informations sur une tâche de fonctionnement, et
l'unité d'acquisition de valeurs d'évaluation (12B) calcule la valeur d'évaluation du paramètre en utilisant les informations externes.

7. Le dispositif de recherche de paramètres (1C) selon la revendication 5, dans lequel
l'unité de collecte de résultats de fonctionnement (11B) acquiert en outre des informations externes comprenant au moins une des informations périphériques du dispositif mécanique (2, 2A, 2B, 2C) ou des informations sur une tâche de fonctionnement, et
l'unité d'acquisition de valeurs d'évaluation (12B) calcule la valeur d'évaluation de la condition de contrainte en utilisant les informations externes.

8. Le dispositif de recherche de paramètres (1, 1A, 1B, 1C) selon l'une quelconque des revendications 1 à 7, dans lequel
le dispositif mécanique (2, 2A, 2B, 2C) est un dispositif de climatisation, de refroidissement et de chauffage (2A, 2B, 2C), et
le paramètre comprend au moins un élément parmi, un degré d'ouverture d'une vanne d'expansion électronique, un degré d'ouverture d'une vanne électromagnétique, une fréquence de fonctionnement d'un compresseur, un volume d'air d'un ventilateur, une vitesse de rotation du ventilateur, un angle d'une ailette qui détermine une direction de soufflage et un débit d'eau cible de commande de refroidissement et de chauffage, qui sont compris dans le dispositif de climatisation, de refroidissement et de chauffage (2A, 2B, 2C).

9. Le dispositif de recherche de paramètres (1, 1A, 1B, 1C) selon la revendication 8, dans lequel
la valeur d'évaluation comprend au moins un élément parmi, une capacité de refroidissement et de chauffage du dispositif de climatisation, de refroidissement et de chauffage (2A, 2B, 2C), une efficacité énergétique indiquant la capacité de refroidissement et de chauffage par rapport à la consommation électrique du dispositif de climatisation, de refroidissement et de chauffage (2A, 2B, 2C), un indice de confort du dispositif de climatisation, de refroidissement et de chauffage (2A, 2B, 2C), une température d'un orifice de soufflage du dispositif de climatisation, de refroidissement et de chauffage (2A, 2B, 2C), d'une température de sortie de l'eau cible de commande de refroidissement et de chauffage du dispositif de climatisation, de refroidissement et de chauffage (2A, 2B, 2C), et une concentration en dioxyde de carbone déchargé par une commande de refroidissement et de chauffage par le dispositif de climatisation, de refroidissement et de chauffage (2A, 2B, 2C).

10. Le dispositif de recherche de paramètres (1, 1A, 1B, 1C) selon la revendication 3, dans lequel
le dispositif mécanique est un dispositif de climatisation, de refroidissement et de chauffage (2A, 2B, 2C), et
la condition de contrainte est qu'une valeur d'au moins un élément parmi, une capacité de refroidissement et de chauffage du dispositif de climatisation, de refroidissement et de chauffage (2A, 2B, 2C), une consommation électrique du dispositif de climatisation, de refroidissement et de chauffage (2A, 2B, 2C), une efficacité énergétique indiquant la capacité de refroidissement et de chauffage par rapport à la consommation électrique du dispositif de climatisation, de refroidissement et de chauffage (2A, 2B, 2C), un degré de chauffage à l'aspiration d'un compresseur compris dans le dispositif de climatisation, de refroidissement et de chauffage (2A, 2B, 2C), un degré de sous-refroidissement d'une entrée d'un détendeur électronique compris dans le dispositif de climatisation, de refroidissement et de chauffage (2A, 2B, 2C), une température et une pression d'un réfrigérant commandé par le compresseur, un débit, une température et une pression d'une eau cible de commande de refroidissement et de chauffage du dispositif de climatisation, de refroidissement et de chauffage (2A, 2B, 2C), et un courant circulant dans un circuit électronique d'une carte électronique comprise dans le dispositif de climatisation, de refroidissement et de chauffage (2A, 2B, 2C) est comprise dans une certaine plage.

11. Le dispositif de recherche de paramètres (1, 1A, 1B, 1C) selon la revendication 6 ou 7, dans lequel
le dispositif mécanique est un dispositif de climatisation, de refroidissement et de chauffage (2A, 2B, 2C), et
les informations externes comprennent au moins un élément parmi, une température de bulbe sec, une température de bulbe humide, une longueur d'une conduite de gaz, une longueur d'une conduite de liquide, une quantité d'un réfrigérant et une charge thermique, qui sont compris dans le dispositif de climatisation, de refroidissement et de chauffage (2A, 2B, 2C).

12. Un procédé de recherche de paramètres par un dispositif de recherche de paramètres (1, 1A, 1B, 1C), le procédé comprenant les étapes consistant à :
collecter, par une unité de collecte de résultats de fonctionnement (11, 11A, 11B), un résultat de fonctionnement comprenant des paramètres indiquant une condition de fonctionnement d'un dispositif mécanique (2, 2A, 2B, 2C) ;
acquérir, par une unité d'acquisition de valeurs d'évaluation (12, 12A, 12B), des valeurs d'évaluation des paramètres obtenues au moyen du résultat de fonctionnement ; et
rechercher, par une unité de recherche de paramètres (13, 13A, 13B, 13C), le paramètre cible parmi les paramètres indiquant la condition de fonctionnement du dispositif mécanique (2, 2A, 2B, 2C), dans lequel
l'unité de recherche de paramètres (13, 13A, 13B, 13C) :
prévoit, lorsqu'une pluralité de candidats de recherche pour les paramètres et les valeurs d'évaluation sont entrés, une relation entre les paramètres et les valeurs d'évaluation dans les candidats de recherche au moyen d'un modèle d'apprentissage automatique qui délivre une relation entre les paramètres et les valeurs d'évaluation dans les candidats de recherche,
compare un résultat de prédiction du modèle d'apprentissage automatique avec un meilleur résultat de recherche présentant une valeur d'évaluation maximale parmi les paramètres obtenus par recherche, et définit, en tant qu'indice de fin de recherche, un nombre de candidats de recherche dont les valeurs d'évaluation prédites sont supérieures à une valeur d'évaluation du meilleur résultat de recherche, et
détermine s'il convient ou non de poursuivre la recherche du paramètre sur la base d'un résultat de comparaison entre l'indice de fin de recherche et un seuil.
